(19) Europäisches Patentamt
European Patent Office
Office européen des brevets

(11) **EP 2 044 426 B1**

(12) **EUROPÄISCHE PATENTSCHRIFT**

(45) Veröffentlichungstag und Bekanntmachung des Hinweises auf die Patenterteilung:
**11.09.2013 Patentblatt 2013/37**

(21) Anmeldenummer: **07786042.7**

(22) Anmeldetag: **12.07.2007**

(51) Int Cl.:
*G01N 29/06* (2006.01)     *G01N 29/11* (2006.01)
*G01N 29/44* (2006.01)     *G01N 29/46* (2006.01)
*G01N 33/34* (2006.01)     *G07D 7/08* (2006.01)

(86) Internationale Anmeldenummer:
**PCT/EP2007/006212**

(87) Internationale Veröffentlichungsnummer:
**WO 2008/009384 (24.01.2008 Gazette 2008/04)**

(54) **VERFAHREN ZUR BEURTEILUNG EINES ZUSTANDS EINES WERTDOKUMENTS IM HINBLICK AUF LAPPIGKEIT MITTELS ULTRASCHALL UND MITTEL ZUR DURCHFÜHRUNG DES VERFAHRENS**

METHOD FOR ASSESSING A STATE OF A DOCUMENT OF VALUE WITH REGARD TO LIMPNESS USING ULTRASOUND, AND MEANS FOR CARRYING OUT THE METHOD

PROCEDE POUR EVALUER L'ETAT FLASQUE D'UN DOCUMENT DE VALEUR AU MOYEN D'ULTRASONS ET MOYEN POUR METTRE EN OEUVRE LE PROCEDE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **17.07.2006 DE 102006033001**

(43) Veröffentlichungstag der Anmeldung:
**08.04.2009 Patentblatt 2009/15**

(73) Patentinhaber: **Giesecke & Devrient GmbH 81677 München (DE)**

(72) Erfinder:
• **DOMKE, Jan
  80797 München (DE)**
• **THIERAUF, Klaus
  81825 München (DE)**
• **KOKRHOUN, Stefan
  82194 Gröbenzell (DE)**
• **MÜLLER, Franz
  81373 München (DE)**

(56) Entgegenhaltungen:
WO-A-02/10716     WO-A-2004/095380
DE-A1- 10 029 442     DE-A1- 10 318 756

**Beschreibung**

Die vorliegende Erfindung betrifft ein Verfahren zur Beurteilung eines Zustands wenigstens eines Wertdokuments im Hinblick auf Lappigkeit sowie Mittel zur Durchführung des Verfahrens.

Unter Wertdokumenten werden dabei und im Folgenden blattförmige Gegenstände verstanden, die beispielsweise einen monetären Wert oder eine Berechtigung repräsentieren und daher nicht beliebig durch Unbefugte herstellbar sein sollen. Sie weisen daher nicht einfach herzustellende, insbesondere zu kopierende Merkmale auf, deren Vorhandsein ein Indiz für die Echtheit, d.h. die Herstellung durch eine dazu befugten Stelle, ist. Wichtige Beispiele für solche Wertdokumente, die insbesondere eine oder mehrere Schichten von Folie und/ oder Papier aufweisen können, sind Coupons, Gutscheine, Schecks und insbesondere Banknoten.

Solche Wertdokumente können bei mehrfacher und insbesondere nicht sehr pfleglicher Verwendung gegenüber neuen, unbenutzten Wertdokumenten geänderte Eigenschaften bzw. einen geänderten Zustand aufweisen. Insbesondere können Wertdokumente wie Banknoten lappig werden. Unter Lappigkeit wird dabei ein Zustand verstanden, in dem die Banknote eine deutlich geringere Steifigkeit bzw. einfachere Verformbarkeit und/oder eine geringere Elastizität aufweist als im Neuzustand.

Diese Veränderung des Zustands von Wertdokumenten kann die maschinelle Verarbeitbarkeit stark herabsetzen oder gar ausschließen. So werden Banknoten, deren Lappigkeit ein bestimmtes Maß überschreitet, als nicht mehr verkehrsfähig charakterisiert aus dem Geldkreislauf entfernt und durch neue Banknoten ersetzt. Der Zustand kann daher als "verkehrsfähig" oder als "zu vernichten" ermittelt werden.

Um eine große Zahl von Wertdokumenten im Hinblick auf die Lappigkeit bewerten zu können, ist es notwendig, über ein möglichst zuverlässiges, schonendes und einfaches, maschinell durchführbares Verfahren zur Prüfung des Zustands von Wertdokumenten im Hinblick auf die Lappigkeit zu verfügen.

Zum Zeitpunkt der Anmeldung wird zur Prüfung des Zustands im Hinblick auf Lappigkeit häufig ein mechanisches Verfahren verwendet, bei dem beispielsweise eine Banknote verformt, insbesondere leicht geknickt, und die bei der Verformung auftretende Schallentwicklung erfaßt und bewertet wird. Dieses Verfahren liefert zwar zuverlässige Ergebnisse, doch werden die Banknoten durch die Verformung weiter abgenutzt.

WO 2004/095380 A1 betrifft eine Vorrichtung in einem Verfahren zur Bestimmung der Lappigkeit von Blattgut, insbesondere von Banknoten, bei dem Blattgut mit Schallwellen bestrahlt, vom Blattgut ausgehende Schallwellen erfaßt und daraus die Lappigkeit des Blattguts bestimmt wird. Eine besonders einfache und sichere Lappigkeitsbestimmung auch unabhängig vom Verschmutzungsgrad des Blattguts kann dadurch erreicht werden, daß sowohl transmittierte, als auch reflektierte Schallwellen gemessen und daraus ein mathematisches Verhältnis der reflektierten und transmittierten Schallwellen gebildet wird, um die Lappigkeit zu bestimmen.

DE 10318 756 A1 betrifft eine Vorrichtung und ein Verfahren zur Bestimmung der Dicke von Blattgut, insbesondere von Banknoten, bei dem die Dicke aufgrund der Laufzeitdifferenz von Ultraschallsignalen bestimmt wird, die von dem zu prüfenden Blattgut beidseitig reflektiert werden. Indem das zu prüfende Blattgut von zwei gegenüberliegenden Seiten her mit Ultraschallsignalen mit unterschiedlichen Signalformen bestrahlt wird, kann auch die Dicke des Randes des Blattguts eindeutig und sicher bestimmt werden.

WO 02/10716 A2 betrifft ein Verfahren zur Verifikation von Dickenmodulationen, insbesondere Wasserzeichen, in oder auf Blattgut. Zur Verminderung des Einflusses von Störungen aus der Umgebung sowie zur Reduktion des Justageaufwands bei der Fertigung und Wartung entsprechender Messsysteme wird das Blattgut mit Schall, insbesondere Ultraschall, beaufschlagt, der durch das Blattgut transmittierte und/oder am Blattgut reflektierte Schall an mehreren Stellen des Blattguts gemessen, für jede der Stellen mindestens ein für den transmittierten und/oder reflektierten Schall charakteristischer Wert erzeugt und die Dickenmodulationen durch Vergleich der Werte mit vorgegebenen Referenzwerten verifiziert.

DE 100 29 442 A1 betrifft ein Verfahren zur Bestimmung von Strukturinhomogenitäten in Blattgut, insbesondere aufgrund von Knitterfalten oder Rissen in Banknoten. Zur Erhöhung der Zuverlässigkeit und zur Vereinfachung der Durchführung dieses Verfahrens ist vorgesehen, daß das Blattgut mit Ultraschall beaufschlagt wird, der durch das Blattgut transmittierte oder am Blattgut reflektierte Ultraschall gemessen wird, wobei ein für den transmittierten bzw. reflektierten Ultraschall charakteristischer erster Wert erzeugt wird, und aus dem ersten Wert ein Maß für die Strukturinhomogenitäten im Blattgut bestimmt wird.

Der Erfindung liegt daher die Aufgabe zugrunde, ein Verfahren zur Bestimmung des Zustands eines Wertdokuments im Hinblick auf Lappigkeit, bei dem eine starke Abnutzung der Wertdokumente vermieden werden kann, und Mittel zur Durchführung des Verfahrens bereitzustellen.

Die Aufgabe wird gelöst durch ein Verfahren zur Beurteilung eines Zustands wenigstens eines Wertdokuments im Hinblick auf Lappigkeit, bei dem aus Transmissionswerten, die die Ultraschalltransmission an verschiedenen Orten auf dem Wertdokument wiedergeben, ein Zustandswert ermittelt wird, der von einer Variation der Transmissionswerte abhängt und den Zustand des Wertdokuments im Hinblick auf Lappigkeit charakterisiert, und unter Verwendung eines vorgegebenen Kriteriums für den Zustandswert ein Zustand des Wertdokuments ermittelt wird.

Die Aufgabe wird weiterhin gelöst durch eine Auswerteeinrichtung zur Beurteilung eines Zustands wenigstens eines Wertdokuments im Hinblick auf Lappigkeit, die so ausgebildet ist, daß sie aus Transmissionswerten, die die Ultraschalltransmission an verschiedenen Orten auf dem Wertdokument wiedergeben, ein Zustandswert ermittelt, der von einer Variation der Transmissionswerte abhängt und den Zustand des Wertdokuments im Hinblick auf Lappigkeit charakterisiert, und unter Verwendung eines vorgegebenen Kriteriums für den Zustandswert einen Zustand des Wertdokuments ermittelt.

Die Auswerteeinrichtung kann prinzipiell unabhängig von einer Einrichtung zur Erfassung der Transmissionswerte ausgebildet sein. Sie braucht dann nur eine Schnittstelle oder eine Lesevorrichtung für Datenträger aufzuweisen, mittels derer Transmissionswerte bzw. -daten eingelesen werden können. Vorzugsweise sind die die Einrichtungen jedoch integriert. Die Aufgabe wird daher auch gelöst durch eine Vorrichtung zur Beurteilung eines Zustands wenigstens eines Wertdokuments im Hinblick auf Lappigkeit mit wenigstens einem Ultraschallsender und wenigstens einem Ultraschallempfänger, die sich gegenüberliegend eine Ultraschallstrecke für eine Erfassung der Transmission an einem Ort auf dem Wertdokument, bilden, einer erfindungsgemäßen Auswerteeinrichtung, und einer Schnittstelle zwischen dem Ultraschallempfänger und der Auswerteeinrichtung, mittels derer Transmissionssignale des Ultraschallempfängers, die Transmissionswerte darstellen, der Auswerteeinrichtung zur Beurteilung des Zustands des Wertdokuments zugeführt werden. Soweit notwendig kann die Auswerteeinrichtung insbesondere dazu ausgebildet sein, eine Umsetzung von Transmissionssignalen in Transmissionswerte durchzuführen.

Zur Beurteilung der Lappigkeit des Wertdokuments wird also erfindungsgemäß nicht ein einzelner Transmissionswert oder ein Mittelwert von Transmissionswerten verwendet, sondern eine Variation der Transmissionswerte, d.h. eine Änderung bzw. Schwankung der Transmissionswerte von Ort zu Ort auf dem Wertdokument. Vorzugsweise werden dabei wenigstens fünf, besser mehr, Transmissionswerte verwendet, die jeweils verschiedenen Orten auf dem Wertdokument entsprechen bzw. zugeordnet sind. Überraschenderweise kann ein so gebildeter Zustandswert als Maß für die Lappigkeit eines Wertdokuments verwendet werden und wenigstens die gleiche Zuverlässigkeit wie die eingangs erwähnte, nicht berührungslos arbeitende Methode oder sogar eine höhere Zuverlässigkeit bieten.

Zur Beurteilung des Zustands wird das vorgegebene Kriterium verwendet, in das der Zustandswert eingeht. In Abhängigkeit davon, ob das Kriterium erfüllt ist, kann dann der Zustand des Wertdokuments beispielsweise als "verkehrsfähig" oder "nicht mehr verkehrsfähig" bzw. "zu vernichten" festgelegt werden. Das Kriterium kann dabei noch von weiteren Parametern abhängen, die ebenfalls Einfluß auf die Verkehrsfähigkeit haben können, beispielsweise Beschädigungen des Wertdokuments. Entsprechend dem Ergebnis der Prüfung des Kriteriums kann ein das Ergebnis der Prüfung wiedergebendes Signal gebildet oder ein entsprechendes Datum gespeichert werden. Es ist auch möglich, direkt eine folgende Einrichtung, beispielsweise eine Transport- oder Sortiereinrichtung zum Transport bzw. der Sortierung der Wertdokumente entsprechend dem ermittelten Zustand anzusteuern, so daß das Wertdokument entsprechend seinem Zustand weiter behandelt wird.

Das Verfahren arbeitet berührungslos, so daß die Wertdokumente schonend beurteilt werden können. Weiter wird die Geräuschbelastung im hörbaren Bereich gegenüber dem Verfahren nach dem Stand der Technik stark reduziert.

Darüber hinaus hat sich das Verfahren überraschenderweise als zuverlässiger herausgestellt als das eingangs beschriebene Verfahren nach dem Stand der Technik. Insbesondere sind die Ergebnisse besser reproduzierbar.

Die Auswerteeinrichtung kann prinzipiell beliebig ausgebildet sein und beispielsweise zur Verarbeitung der Transmissionswerte eine fest vorgegebene analoge oder insbesondere digitale Schaltung aufweisen, die zur Durchführung des erfindungsgemäßen Verfahrens ausgebildet ist. Vorzugsweise umfaßt die Auswerteeinrichtung jedoch einen Prozessor, einen Speicher, in dem ein Computerprogramm zur Ausführung durch den Prozessor gespeichert ist, bei dessen Ausführung der Prozessor das erfindungsgemäße Verfahren durchführt, und eine Schnittstelle zur Erfassung von Signalen oder Daten, aus denen die Transmissionswerte und/oder die Variation der Transmissionswerte ermittelbar sind oder die die Transmissionswerte wiedergeben.

Gegenstand der Erfindung ist daher auch ein Computerprogramm zur Ausführung mittels einer Datenverarbeitungseinrichtung mit einem Prozessor, das Programmcode enthält, bei dessen Ausführung der Prozessor das erfindungsgemäße Verfahren durchführt und insbesondere aus Transmissionswerten, die die Ultraschalltransmission an verschiedenen Orten auf dem Wertdokument wiedergeben, ein Zustandswert ermittelt, der von einer Variation der Transmissionswerte abhängt und den Zustand des Wertdokuments charakterisiert, und unter Verwendung eines vorgegebenen Kriteriums für den Zustandswert einen Zustand des Wertdokuments ermittelt. Dieses Computerprogramm kann insbesondere in dem zuvor genannten Speicher gespeichert sein.

Diese Ausführungsform bietet den Vorteil, daß zum einen Standardbauteile für die Auswerteeinrichtung verwendet werden können und daß zum anderen der Prozessor noch andere Aufgaben erfüllen kann.

Unter einem Prozessor wird im Rahmen der vorliegenden Erfindung nicht nur ein einzelner Prozessor mit einem oder mehreren Kernen verstanden, sondern auch ein System von gekoppelten Prozessoren. Weiter kann als Prozessor beispielsweise ein Vielzweckprozessor, beispielsweise für gewöhnliche Personal Computer, oder ein digitaler Signalprozessor verwendet werden. Darüber hinaus kann der Prozessor auch ein FPGA umfassen.

Weitere bevorzugte Ausführungsformen und Weiterbildungen sind in den Ansprüchen, der Beschreibung und den Figuren beschrieben.

Vorzugsweise werden bei dem Verfahren und dem Computerprogramm keine Remissionswerte, d.h. Intensitätswerte, von zurückgeworfenem Ultraschall, zur Ermittlung des Zustandswertes verwendet.

Die Ultraschalltransmissionswerte können prinzipiell in beliebiger Art und Weise erfaßt werden. Beispielsweise können die Orte parallel oder nacheinander mit gebündeltem Ultraschall kontinuierlich beschallt werden. Es ist jedoch bevorzugt, daß bei dem Verfahren Ultraschallpulse auf wenigstens zwei verschiedene Orte auf dem Wertdokument abgegeben werden und von den Orten auf die Ultraschallpulse hin ausgehende Ultraschallpulse unter Bildung der Transmissionswerte erfaßt werden. Dies erlaubt eine besonders schnelle Durchführung des Verfahrens. Die Pulslängen sind dabei vorzugsweise kurz, aber wenigstens so lang gewählt, daß dem Ultraschallpuls noch in guter Nährung eine Frequenz zugeordnet werden kann.

Die Abgabe der Ultraschallpulse kann unabhängig von der Auswertung der Transmissionswerte, beispielsweise durch eine separate Schaltung ausgelöst, erfolgen. Vorzugsweise ist bei der Vorrichtung jedoch die Auswerteeinrichtung mit dem Ultraschallsender zu dessen Ansteuerung verbunden und dazu ausgebildet, den Ultraschallsender zur Abgabe von Ultraschallpulsen anzusteuern.

Überraschenderweise wurde festgestellt, daß sich besonders gute Resultate mit dem Verfahren erzielen lassen, wenn der Ultraschall eine Ultraschallfrequenz größer als 300 kHz aufweist. Bei der Vorrichtung ist dazu vorzugsweise der wenigstens eine Ultraschallsender dazu ausgebildet, Ultraschall mit einer Ultraschallfrequenz größer als 300 kHz abzugeben.

Weiterhin wurde überraschend gefunden, daß besonders gute Resultate mit dem Verfahren erhalten werden, wenn durch den Ultraschall jeweils beschallte Flecken des Wertdokuments einen Durchmesser kleiner als 3,5 mm aufweisen. Hierzu ist die Vorrichtung und insbesondere deren Ultraschallsensor zur Abgabe von Ultraschall ausgebildet, der bei Auftreffen auf ein in einem vorgegeben Abstand von dem Ultraschallsensor angeordnetes Wertdokument einen Fleck mit einem Durchmesser kleiner als 3,5 mm beschallt. In diesem Fall sind die Variationen, die auf die Lappigkeit des Wertdokuments zurückzuführen sind, besonders ausgeprägt. Der Ultraschall kann dabei insbesondere in Form von Bündeln abgegeben werden. Der Durchmesser kann beispielsweise ermittelt werden, indem eine Probe mit möglichst scharf abgegrenzten Bereichen verminderter Transmission, beispielsweise eine Banknote mit einem Klebestreifen, untersucht wird. Dazu wird der Fleck relativ zu der Probe über den Abschnitt bewegt, in dem sich die Transmission möglichst abrupt ändert. Dabei wird die Relativbewegung so gewählt, daß Ultraschalltransmissionswerte entlang einer Richtung orthogonal zu der Grenze zwischen den Bereich unterschiedlicher Transmission in räumlichen Abständen erfaßt werden, die wesentlich kleiner als der zu erwartende Durchmesser des Flecks sind. Der entsprechende Verlauf der Transmissionswerte als Funktion des Ortes ergibt einen kontinuierlichen Abfall von einem Plateau mit hohen Transmissionswerten zu einem Plateau niedrigerer Transmissionswerte, das sich ergibt, wenn der Bereich niedrigerer Transmission deutlich breiter als der zu erwartende Fleckdurchmesser gewählt ist. Die Breite des Bereichs, in dem die Transmission abfällt, entspricht dann dem Fleckdurchmesser und kann als Wert für den Fleckdurchmesser verwendet werden. Die Breite kann ermittelt werden, indem an den Verlauf der Transmissionswerte eine stetige Funktion mit drei aneinanderschließenden Bereichen angepaßt wird, in denen diese einen linearen Verlauf zeigt. Die Breite des mittleren Bereichs kann als Fleckdurchmesser verwendet werden.

Die Erfassung der Transmissionswerte kann prinzipiell auf beliebige Art und Weise erfolgen. Insbesondere können die im Folgenden genannten Möglichkeiten alternativ oder in Kombination miteinander verwendet werden. Gemäß einer ersten Möglichkeit wird bei dem Verfahren zur Erfassung der Transmissionswerte das Wertdokument bewegt. Die Vorrichtung kann dazu vorzugsweise eine Transporteinrichtung zum Transport des Wertdokuments durch die Ultraschallstrecke aufweisen und die Auswerteeinrichtung kann dazu ausgebildet sein, nacheinander wenigstens fünf, verschiedenen Orten auf dem Wertdokument entsprechende Transmissionswerte zu erfassen und diese auszuwerten.

Die Orte brauchen, je nach Art der Bestimmung der Variation, prinzipiell nicht durch Koordinaten oder andere explizite Ortsangaben spezifiziert zu sein. Es ist jedoch möglich, deren Lage bei der genannten Möglichkeit durch den Zeitabstand der Erfassungszeiten und die Transportgeschwindigkeit oder - bei Erfassung in konstanten Zeitabständen - nur durch die Reihenfolge wenigstens relativ zueinander zu ermitteln.

Gemäß einer zweiten Möglichkeit können bei dem Verfahren wenigstens zwei Ultraschallstrecken zur Erfassung der Transmissionswerte verwendet werden. Die Vorrichtung kann dazu vorzugsweise wenigstens eine weitere Ultraschallstrecke umfassen und die Auswerteeinrichtung kann dazu ausgebildet sein, entlang der weiteren Ultraschallstrecke erfaßte Transmissionssignale auszuwerten. Zur Bereitstellung der weiteren Ultraschallstrecke kann die Vorrichtung insbesondere über einen weiteren Ultraschallsender und einen weiteren Ultraschallempfänger verfügen.

Bei Verwendung von mehreren Ultraschallstrecken können die Transmissionswerte nacheinander erfaßt werden, wenn die Gefahr besteht, daß ein Übersprechen zwischen den Ultraschallstrecken auftritt. Soll jedoch eine möglichst schnelle Erfassung der Transmissionswerte erfolgen, werden bei dem Verfahren vorzugsweise für wenigstens zwei verschiedene Orte die Transmissionswerte gleichzeitig bestimmt. Die Auswerteeinrichtung ist dazu vorzugsweise so ausgebildet, daß sie Ultraschallsender für die Ultraschallstrecken so ansteuert, daß diese gleichzeitig Ultraschallpulse aussenden. Unter einem gleichzeitigen Aussenden wird dabei verstanden, daß zwei Ultraschallpulse höchstens in einem zeitlichen Abstand voneinander abgegeben werden, der kleiner als die Dauer eines der Ultraschallpulse ist. Weiterhin brauchen Ultraschallpulse nicht auf allen verwendeten Ultraschallstrecken gleichzeitig abgegeben zu werden, wenn mehr als zwei Ultraschallstrecken verwendet werden.

Eine weitere Möglichkeit zur Erfassung der Transmissionswerte besteht darin, zur Erfassung der Transmissionswerte die Ausrichtung der Ultraschallstrecke zu ändern. Hierzu können bei der der Ultraschallsender und/oder der Ultraschallempfänger relativ zu dem Untersuchungsbereich bewegbar sein und die Auswerteeinrichtung ermittelt die Transmissionswerte in Abhängigkeit von der Stellung des Ultraschallsenders bzw. Ultraschallempfängers.

Die Orte, für die die Transmissionswerte erfaßt werden, können prinzipiell beliebig gewählt sein; insbesondere braucht der Zustandswert nur für einen Abschnitt des Wertdokuments ermittelt zu werden. Vorzugsweise überdekken die Orte aber einen möglichst großen Bereich des Wertdokuments.

So können bei dem Verfahren die Orte zufällig verteilt sein. Diese Ausführungsform hat den Vorteil, daß systematische durch die Anordnung der Orte bedingte Fehler weitgehend vermieden werden können.

Für die Durchführung des Verfahrens ist es jedoch günstiger, daß die Orte regelmäßig verteilt sind. Insbesondere bei Erfassung der Transmissionswerte unter Bewegung des Wertdokuments ergibt sich eine solche Verteilung der Orte allein schon bei einer Erfassung in konstanten Zeitabständen.

Insbesondere können bei dem Verfahren die Orte innerhalb eines linearen Streifens, vorzugsweise parallel zu einer Transportrichtung der Wertdokumente, angeordnet sein. Diese Anordnung eignet sich insbesondere, wenn eine oder mehrere quer zur Transportrichtung angeordnete Ultraschallsender und -empfänger zur Erfassung der Transmissionswerte verwendet werden.

In diesem Fall ist besonders bevorzugt, daß bei dem Verfahren die Orte innerhalb von wenigstens zwei Streifen angeordnet sind. Die Vorrichtung kann hierzu vorzugsweise wenigstens einen weiteren Ultraschallempfänger zur Erfassung von Transmissionswerten aufweisen, der in einer vorgegebenen Richtung von dem wenigstens einen Ultraschallempfänger beabstandet ist. Die vorgegebene Richtung ist dabei vorzugsweise orthogonal oder geneigt zu einer Transportrichtung des Wertdokuments ausgerichtet, falls dieses bei der Erfassung der Transmissionswerte bewegt wird. Auf diese Weise kann eine größere Fläche des Wertdokuments beurteilt werden, so daß die Lappigkeit mit größerer Zuverlässigkeit ermittelt werden kann.

Prinzipiell braucht bei dem Verfahren nur eine Menge von Transmissionswerten zur Ermittlung des einen Zustandswerts verwendet werden. Es ist bei dem Verfahren jedoch auch möglich, daß aus weiteren Transmissionswerten für verschiedene weitere Orte auf dem Wertdokument ein weiterer Zustandswert ermittelt wird, der von einer Variation der weiteren Transmissionswerte für die weiteren Orte abhängt, und daß in das vorgegebene Kriterium zusätzlich der weitere Zustandswert eingeht. Die Auswerteeinrichtung ist dann vorzugsweise dazu ausgebildet, aus weiteren Transmissionswerten für verschiedene weitere Orte auf dem Wertdokument einen weiteren Zustandswert zu ermitteln, der von einer Variation der weiteren Transmissionswerte für die weiteren Orte abhängt. In das vorgegebene Kriterium geht dann zusätzlich der weitere Zustandswert ein. Das Computerprogramm kann vorzugsweise Programmcode enthalten, bei dessen Ausführung der Prozessor aus weiteren Transmissionswerten für verschiedene weitere Orte auf dem Wertdokument einen weiterer Zustandswert ermittelt, der von einer Variation der weiteren Transmissionswerte für die weiteren Orte abhängt, das Programmcode enthält, so daß in das vorgegebene Kriterium zusätzlich der weitere Zustandswert eingeht. Die Ermittlung des weiteren Zustandswertes kann insbesondere auf die gleiche Art und Weise erfolgen wie die Ermittlung des Zustandswertes. Diese Ausführungsform hat mehrere Vorteile. So können die wenigstens zwei resultierenden Zustandswerte dazu verwendet werden, die Zuverlässigkeit der Ermittlung der Zustandswerte zu prüfen. Dies ist insbesondere dann der Fall, wenn die Orte für die Transmissionswerte und die weiteren Orte für die weiteren Transmissionswerte nicht in jeweils zusammenhängenden Flächenbereichen auf dem Wertdokument liegen.

Besonders bevorzugt liegen bei dem Verfahren die Orte für die Transmissionswerte und die weiteren Orte für die weiteren Transmissionswerte jedoch jeweils in voneinander getrennten, zusammenhängenden Bereichen. Es ist dann eine Ermittlung eines Zustandswertes im Hinblick auf die Lappigkeit für die einzelnen Bereiche möglich. Die ermittelten Zustandswerte bzw. weiteren Zustandswerte werden im folgenden dann auch als Bereichszustandswerte bezeichnet. Insbesondere können die Bereiche durch die bereits genannten Streifen gegeben sein. Die Vorrichtung mit der wie zuvor erwähnt ausgebildeten Auswerteeinrichtung kann dann vorzugsweise weiter so ausgebildet sein, daß aus Transmissionssignalen für die Orte, die mittels der Ultraschallstrecke bzw. der weiteren Ultraschallstrecke ermittelt werden, die Transmissionswerte bzw. die weiteren Transmissionswerte ermittelt werden.

Je nach Anforderung an die Zustandsermittlung können sich die Bereiche überlappen oder keinen gemeinsamen Ort aufweisen.

Weiter brauchen die Transmissionswerte und die weiteren Transmissionswerte nicht getrennt voneinander erfaßt zu werden. Vielmehr kann eine Menge von Transmissionswerte in wenigstens zwei disjunkte Mengen aufgeteilt werden, von denen eine erste die Transmissionswerte zur Ermittlung des Zustandswertes und die zweite bzw. weitere Menge die weiteren Transmissionswerte für die weiteren Orte zur Ermittlung des weiteren Zustandswertes aufweist.

Die Berücksichtigung der Variation kann auf unterschiedliche Art und Weise erfolgen. Ein besonders ausgeprägter Zusammenhang zwischen Variation und Lappigkeit ergibt sich, wenn diese Variation nicht auf systematische Änderungen in der Transmission, wie sie beispielsweise durch Wasserzeichen in Banknoten verursacht werden, zurückzuführen ist, sondern statischen bzw. zufälligen Charakter hat. Um systematische Änderungen möglichst weitgehend berücksichtigen zu können, bestehen mehrere Möglichkeiten, von denen wenigstens die drei im Folgenden geschilderten Möglichkeiten alternativ oder auch in Kombination verwendet werden können.

Bei dem Verfahren nach einer ersten Möglichkeit können bei der Ermittlung des Zustandswertes Transmissionswerte für Orte in einem vorgegebenen Bereich des Wertdokuments nicht oder mit geringerer Gewichtung als solche für Orte außerhalb des Bereichs verwendet werden. Die Auswerteeinrichtung ist dazu vorzugsweise weiter so ausgebildet, daß bei der Ermittlung des Zustandswertes Transmissionswerte für Orte in einem vorgegebenen Bereich nicht oder mit geringerer Gewichtung als solche für Orte außerhalb des Bereichs verwendet werden. Das Computerprogramm kann dazu vorzugsweise Programmcode enthalten, bei dessen Ausführung der Prozessor bei der Ermittlung des Zustandswertes Transmissionswerte für Orte in einem vorgegebenen Bereich nicht oder mit geringerer Gewichtung als solche für Orte außerhalb des Bereichs verwendet werden. Dies hat den Vorteil, daß beispielsweise ein Wasserzeichenbereich oder ein Bereich mit einem Sicherheitsfaden zur Ermittlung der Lappigkeit ganz außer Betracht bleiben oder nur gering gewichtet berücksichtigt werden kann. Die entsprechenden Transmissionswerte brauchen dazu entweder nicht erfaßt zu werden oder können nach der Erfassung bei der Ermittlung einfach unberücksichtigt bleiben.

Weiter können bei dem Verfahren bei der Ermittlung des Zustandswertes Transmissionswerte für Orte in einem vorgegebenen Bereich stärker gewichtet werden als Transmissionswerte für andere Orte. Dazu ist die Auswerteeinrichtung vorzugsweise weiter so ausgebildet, daß bei der Ermittlung des Zustandswertes Transmissionswerte für Orte in einem vorgegebenen Bereich stärker gewichtet werden als Transmissionswerte für andere Orte. Hierzu kann das Computerprogramm insbesondere Programmcode enthalten, bei dessen Ausführung der Prozessor bei der Ermittlung des Zustandswertes Transmissionswerte für Orte in einem vorgegebenen Bereich stärker gewichtet als Transmissionswerte für andere Orte. Diese Ausführungsform hat die gleichen Vorteile wie die zuvor beschriebene Ausführungsform.

Bei der dritten Möglichkeit werden bei dem Verfahren vor oder bei der Ermittlung des Zustandswertes die Transmissionswerte in Bezug auf ein für das Wertdokument vorgegebenes Transmissionsprofil korrigiert. Die Auswerteeinrichtung ist dazu vorzugsweise weiter so ausgebildet ist, daß vor oder bei der Ermittlung des Zustandswertes die Transmissionswerte in Bezug auf ein für das Wertdokument vorgegebenes Transmissionsprofil korrigiert werden. Dementsprechend kann das Computerprogramm Programmcode enthalten, bei dessen Ausführung der Prozessor vor oder bei der Ermittlung des Zustandswertes die Transmissionswerte in Bezug auf ein für das Wertdokument vorgegebenes Transmissionsprofil korrigiert. Diese Ausführungsform hat den Vorteil, daß zur Beurteilung des Zustands des Wertdokuments auch Bereich herangezogen werden können, die eine systematische Änderung der Ultraschalltransmission aufweisen, beispielsweise ein Bereich mit einem ein Bild darstellenden Wasserzeichen oder insbesondere auch einem Balkenwasserzeichen bzw. Barcode-Wasserzeichen. Zur Berücksichtigung der systematischen Änderung kann insbesondere das bekannte systematisch vorhandene bzw. zu erwartende Transmissionsprofil von den ermittelten Transmissionswerten subtrahiert werden.

Um bei den drei genannten Möglichkeiten entsprechende Bereiche bzw. Transmissionsprofile zutreffend auswählen zu können, können bei dem Verfahren vorzugsweise zuvor der Typ des Wertdokuments, bei Banknoten beispielsweise die Denomination, ermittelt und zur Auswahl der Bereiche bzw. des Transmissionsprofils Parameter aus einer in der Auswerteeinrichtung gespeicherten Tabelle mit möglichen Typen von Wertdokumenten zugeordneten, die Bereiche oder das Transmissionsprofil wiedergebenden Parametern verwendet werden.

Zur Berücksichtigung der gegebenenfalls in Bezug auf ein systematisches Transmissionsprofil bereinigten Variation können prinzipiell verschiedene Verfahren verwendet werden, die die Stärke einer Schwankung einer zu untersuchenden Größe quantifizieren. Es hat sich jedoch gezeigt, daß einige Möglichkeiten besonders zuverlässige Ergebnisse hervorbringen.

Gemäß einer ersten Möglichkeit können zur Berücksichtigung der Variation Abweichungen der Transmissionswerte von einem vorgegebenen Wert, vorzugsweise einem Mittelwert der Transmissionswerte, verwendet werden. Die Auswerteeinrichtung ist dann vorzugsweise dazu ausgebildet, zur Berücksichtigung der Variation Abweichungen der Transmissionswerte von einem vorgegebenen Wert, vorzugsweise einem Mittelwert der Transmissionswerte, zu verwenden. Das Computerprogramm kann insbesondere Programmcode enthalten, bei dessen Ausführung der Prozessor zur Berücksichtigung der Variation Abweichungen der Transmissionswerte von einem vorgegebenen Wert, vorzugsweise einem Mittelwert der Transmissionswerte, verwendet. Unter einer Abweichung kann beispielsweise ein Verhältnis der Werte verstanden werden. Vorzugsweise ist die Abweichung jedoch die Differenz der Werte oder ein Betrag der Differenz der Werte. Zur Bildung des Zustandswertes können dann beliebige gerade Funktionen der Differenzen oder beliebige, insbesondere auch ungerade Funktionen der Beträge verwendet werden. Insbesondere kann der Zustandswert von einer Summe von Werten einer geraden Funktion der Differenzen oder einer ungeraden Funktion der Beträge abhängen. Beispielsweise kann der Zustandswert proportional zu der Varianz bzw. der Standardabweichung der Transmissionswerte sein. Dies hat den Vorteil, daß keinerlei Informationen über die Lage der Orte, für die die Transmissionswerte erfaßt wurden, relativ zueinander oder relativ zu dem Wertdokument bekannt zu sein brauchen.

Bei einer anderen Ausführungsform des Verfahrens werden zur Berücksichtigung der Variation Abweichungen zwischen Transmissionswerten für verschiedene Orte verwendet. Die Auswerteeinrichtung kann dann vorzugsweise dazu ausgebildet sein, zur Berücksichtigung der Variation Abweichungen zwischen Transmissionswerten für verschiedene Orte zu verwenden. Dazu kann weiter das Computerprogramm Programmcode aufweisen, bei dessen Ausführung der Prozessor zur Berücksichtigung der Variation Abweichungen zwischen Transmissionswerten für verschiedene Orte verwendet. Diese Ausführungsform ergibt besonders gute Resultate, da die Lappigkeit eines Wertdokuments unter anderem durch lokale Unterschiede in den Eigenschaften des Wertdokuments beeinflußt wird. Darüber hinaus kann die Ermittlung schnell erfolgen.

Insbesondere ist es dann bevorzugt, daß bei dem Verfahren als Abweichungen zwischen Transmissionswerten für verschiedene Orte nur Abweichungen zwischen Transmissionswerten für Orte verwendet werden, deren Abstand nicht größer als ein vorgegebener Maximalabstand ist. Die Auswerteeinrichtung kann dann vorzugsweise dazu ausgebildet sein, als Abweichungen zwischen Transmissionswerten für verschiedene Orte nur Abweichungen zwischen Transmissionswerten für Orte zu verwenden, deren Abstand nicht größer als ein vorgegebener Maximalabstand ist. Weiter kann das Computerprogramm vorzugsweise Programmcode enthalten, bei dessen Ausführung der Prozessor als Abweichungen zwischen Transmissionswerten für verschiedene Orte nur Abweichungen zwischen Transmissionswerten für Orte verwendet, deren Abstand nicht größer als ein vorgegebener Maximalabstand ist. Diese Ausführungsform erlaubt eine besonders schnelle Ermittlung des Zustandswertes. Der Maximalabstand kann dabei als reale Distanz oder durch die Nachbarschaft zu anderen Orten vorgegeben werden. Insbesondere brauchen bei einer besonders bevorzugten Ausführungsform nur Abweichungen zwischen nächstbenachbarten Orten berücksichtigt zu werden.

Alternativ kann, insbesondere bei Verwendung von Orten entlang einer Geraden bzw. in einem linearen Streifen bei dem Verfahren zur Berücksichtigung der Variation ein Spektrum der Transmissionswerte verwendet werden. Die Auswerteeinrichtung ist dann vorzugsweise dazu ausgebildet, zur Berücksichtigung der Variation ein Spektrum der Transmissionswerte zu verwenden. Dementsprechend kann das Computerprogramm Programmcode halten, bei dessen Ausführung der Prozessor zur Berücksichtigung der Variation ein Spektrum der Transmissionswerte verwendet. Als Spektrum kann beispielsweise ein Wavelet- Spektrum verwendet werden. Eine besonders schnelle Ermittlung kann sich bei Verwendung eines Fourier-Spektrums ergeben, insbesondere dann, wenn Verfahren zur schnellen Fourier-Transformation (FFT) verwendet werden.

Eine weitere Möglichkeit besteht darin, daß bei dem Verfahren zur Berücksichtigung der Variation eine Verteilungsfunktion der Transmissionswerte ermittelt und verwendet wird. Die Auswerteeinrichtung kann dann vorzugsweise dazu ausgebildet sein, zur Berücksichtigung der Variation eine Verteilungsfunktion der Transmissionswerte zu ermitteln und zu verwenden. Insbesondere kann das Computerprogramm dann Programmcode enthalten, bei dessen Ausführung der Prozessor zur Berücksichtigung der Variation eine Verteilungsfunktion der Transmissionswerte zu ermitteln und zu verwenden. Die Verteilungsfunktion kann beispielsweise in dem Sinne verwendet werden, daß ihre Halbwertsbreite ermittelt wird. Bei dieser Auswertung können auch einfach weitere Informationen über die Transmissionswerte erhalten werden.

Die Transmissionswerte können nicht nur aufgrund einer systematischen bzw. vorgegebenen Variation, beispielsweise durch das Wasserzeichen, über die durch die Lappigkeit verursachte Variation hinaus schwanken, sondern auch durch andere Eigenschaften des Wertdokuments, die zufällig auftreten können. Ein Beispiel hierfür ist das Auftreten von kleinen Löchern und/oder Rissen in dem Wertdokument. Löcher oder Risse können zu außerordentlich hohen Transmissionswerten führen, die die Ermittlung der Lappigkeit beeinträchtigen können.

Daher ist es bevorzugt, daß bei der Ermittlung des Zustandswertes Transmissionswerte, die gemäß einem vorgegebenen Ausreißerkriterium als untypisch gelten, nicht oder weniger stark als andere Transmissionswerte berücksichtigt werden. Die Auswerteeinrichtung ist dann vorzugsweise weiter dazu ausgebildet, bei der Ermittlung des Zustandswertes Transmissionswerte, die gemäß einem vorgegebenen Ausreißerkriterium als untypisch gelten, nicht oder weniger stark als andere Transmissionswerte zu berücksichtigen. Insbesondere kann das Computerprogramm vorzugsweise Programmcode enthalten, bei dessen Ausführung der Prozessor bei der Ermittlung des Zustandswertes Transmissionswerte, die gemäß einem vorgegebenen Ausreißerkriterium als untypisch gelten, nicht oder weniger stark als andere Transmissionswerte berücksichtigt.

Vorzugsweise kann als Ausreißerkriterium geprüft werden, ob einer der Transmissionswerte innerhalb eines vorgegebenen Bereichs liegt. Die Auswerteeinrichtung kann dazu vorzugsweise so ausgebildet sein, daß als Ausreißerkriterium geprüft wird, ob einer der Transmissionswerte innerhalb eines vorgegebenen Bereichs liegt. Dementsprechend kann das Computerprogramm vorzugsweise Programmcode enthalten, bei dessen Ausführung der Prozessor als Ausreißerkriterium prüft, ob einer der Transmissionswerte innerhalb eines vorgegebenen Bereichs liegt. Der vorgegebene Bereich kann insbesondere durch Versuche mit Wertdokumenten unterschiedlicher Lappigkeit empirisch ermittelt werden. Bei dieser Ausführungsform wird insbesondere von der Tatsache Gebrauch gemacht, daß Löcher und Risse zu Variationen der Transmissionswerte führen, die sich in ihrer Größe wesentlich von Variationen unterscheiden, die durch Lappigkeit bzw. entsprechende Eigenschaften in den kleinräumigen Eigenschaften des Wertdokuments verursacht werden. Insbesondere bei dem Auftreten von Löchern und Rissen spielt es eine erhebliche Rolle, daß die Größe eines auf dem Wertdokument beschallten Flecks an einem Ort nicht zu groß ist, da andernfalls gegebenenfalls eine Art Mittelungseffekt über die lappigkeitsbedingten Schwankungen auftritt und sich in den Transmissionswerten nur noch Löcher, Risse oder andere makroskopische Strukturinhomogenitäten wie beispielsweise scharfe Knitterfalten widerspiegeln.

Als Kriterium für den Zustandswert kann insbesondere ein Kriterium für die Größe des Zustandswertes, insbesondere ein Schwellwertkriterium, verwendet werden. Der Schwellwert kann dabei in Abhängigkeit von einer höchstens zulässigen Lappigkeit, die beispielsweise bei Banknoten durch die Verkehrsfähigkeit bzw. die maschinelle Bearbeitbarkeit der Banknoten gegeben sein kann, vorgegeben werden. In das Kriterium für den Zustand des Wertdokuments kann neben dem Zustandswert für die Lappigkeit noch wenigstens ein anderer Wert bzw. eine andere Eigenschaft des Wertdokuments eingehen, beispielsweise das Vorhandensein von Klebestreifen oder starken Verschmutzungen.

Das Ergebnis der Prüfung kann dann gespeichert, ausgegeben oder zur Ansteuerung einer Einrichtung einer Wertdokumentbearbeitungseinrichtung verwendet werden, wozu die Auswerteeinrichtung entsprechend ausgebildet sein kann und insbesondere auch das Computerprogramm entsprechenden Programmcode zur Ausführung durch den Prozessor enthalten kann.

Weiterer Gegenstand der Erfindung ist ein Datenträger, auf dem ein erfindungsgemäßes Computerprogramm gespeichert ist. Als Datenträgerträger kommen insbesondere optische Datenträger wie beispielsweise CD oder DVD, magneto-optische Datenträger, magnetische Datenträger wie beispielsweise Festplatten und Halbleiterspeicher, beispielsweise Flashspeicher in Betracht, auf deren Inhalt durch eine entsprechende Einrichtung eines Computers zugegriffen werden kann.

Die Erfindung wird im weiteren noch näher beispielhaft anhand der Zeichnungen erläutert. Es zeigen:

Fig. 1 eine schematische Darstellung einer Banknotenbearbeitungsvorrichtung,

Fig. 2 eine schematische Darstellung eines Ultraschallsensors der Banknotenbearbeitungsvorrichtung in Fig. 1 mit einer Steuer- und Auswerteeinrichtung in einer Ansicht entlang einer Transportrichtung von Banknoten,

Fig. 3 eine schematische Darstellung von Ultraschallsendern des Ultraschallsensors in Fig. 2 in einer Ebene parallel zur Ebene einer zu untersuchenden Banknote,

Fig. 4 eine schematische teilweise Darstellung einer Banknote mit durch die Ultraschallsender des Ultraschallsensors in Fig. 2 beschallten Flekken bzw. Abtastbereichen,

Fig. 5 eine schematische Darstellung einer Banknote mit Orten bzw. Abtastbereichen, für die 'Transmissionswerte mittels des Ultraschallsensors in Fig. 3 ermittelt wurden,

Fig. 6 ein vereinfachtes Ablaufdiagramm für ein Verfahren zur Ermittlung eines Zustands einer Banknote mittels des Ultraschallsensors und der Steuer- und Auswerteeinrichtung in Fig. 2 nach einer bevorzugten Ausführungsform der Erfindung, und

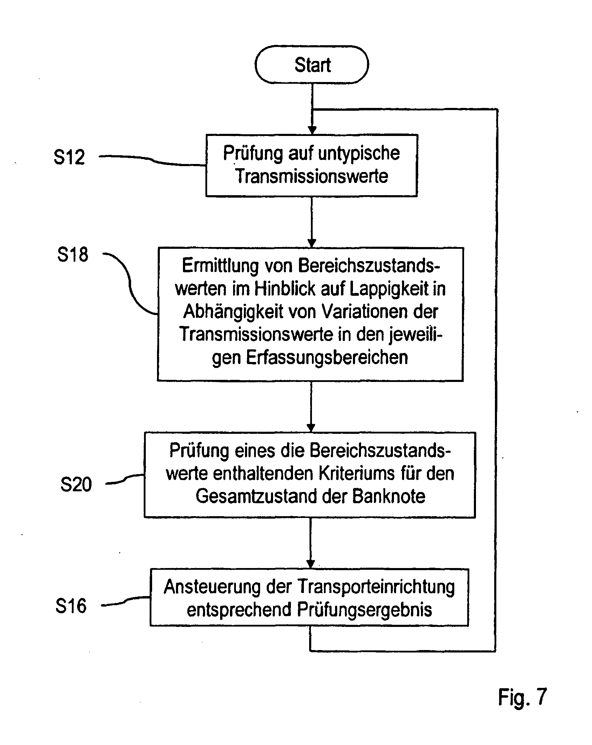

Fig. 7 ein vereinfachtes Ablaufdiagramm für ein Verfahren zur Ermittlung eines Zustands einer Banknote mittels des Ultraschallsensors und der Steuer- und Auswerteeinrichtung in Fig. 2 nach einer weiteren bevorzugten Ausführungsform der Erfindung.

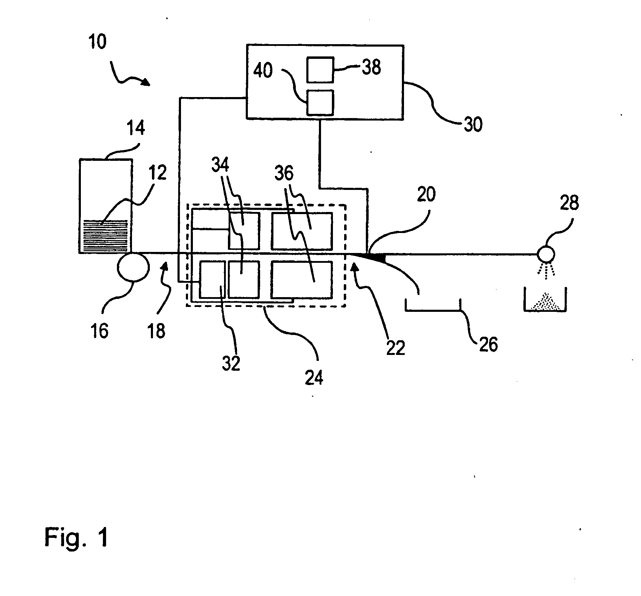

Eine Banknotenbearbeitungsvorrichtung 10 in Fig. 1, die eine Vorrichtung zur Bestimmung eines Zustands von Wertdokumenten in Form von Banknoten 12 umfaßt, verfügt über ein Eingabefach 14 für die Eingabe von zu bearbeitenden Banknoten 12, einen Vereinzler 16, der auf Banknoten 12 in dem Eingabefach 14 zugreifen kann, eine Transporteinrichtung 18 mit einer Weiche 20, und entlang eines durch die Transporteinrichtung 18 gegebenen Transportpfades 22 eine vor der Weiche 20 angeordnete Sensoranordnung 24, und nach der Weiche 20 ein Ausgabefach 26 und einen Schredder 28 zur Vernichtung von Banknoten. Eine Steuer- und Auswerteeinrichtung 30 ist wenigstens mit der Sensoranordnung 24 und der Weiche 20 über Signalverbindungen verbunden und dient zur Auswertung von Sensorsignalen der Sensoranordnung 24 und Ansteuerung wenigstens der Weiche 20 in Abhängigkeit von dem Ergebnis der Auswertung der Sensorsignale.

Die Sensoranordnung 24 in Verbindung mit der Steuer- und Auswerteeinrichtung 30 dient zur Erfassung von Eigenschaften der Banknoten 12 und Bildung von diese Eigenschaften wiedergebenden Sensorsignalen. Die Sensoranordnung 24 umfaßt dazu wenigstens einen Sensor; in diesem Ausführungsbeispiel sind drei Sensoren vorgesehen, nämlich ein erster Sensor 32, im Beispiel ein optischer Sensor, der von der Banknote remittierte optische Strahlung erfaßt, ein zweiter Sensor 34, im Beispiel ebenfalls ein optischer Sensor, der durch die Banknote transmittierte optische Strahlung erfaßt, und ein dritter Sensor 36, im Beispiel ein akustischer Sensor, genauer ein Ultraschallsensor, der von der Banknote stammende, insbesondere transmittierte, Ultraschallsignale erfaßt.

Während des Vorbeitransports einer Banknote erfassen die Sensoren 32, 34 und 36 entsprechend ihrer Funktion Abtastbereichseigenschaften von durch die Relativlage der Sensoren zu der Banknote bestimmten Abtastbereichen auf der Banknote, wobei die entsprechenden Sensorsignale gebildet werden. Jeder der Sensoren kann dabei eine andere räumliche Auflösung aufweisen, d.h. die Größe und Verteilung der erfaßten Abtastbereiche auf der Banknote kann in Abhängigkeit von dem jeweiligen Sensor und der verwendeten Transportgeschwindigkeit variieren. Jedem der Abtastbereiche ist dabei ein Ort zugeordnet, der die Lage der Abtastbereiche für den jeweiligen Sensor zueinander und/oder relativ zu der Banknote wiedergibt.

Aus den analogen oder digitalen Sensorsignalen der Sensoren 32, 34, 36 wird von der Steuer- Ausrichtung 30 bei einer Sensorsignalauswertung wenigstens eine Abtastbereichseigenschaft und/ oder wenigstens eine Banknoteneigenschaft ermittelt, die für die Überprüfung der Banknoten in Bezug auf deren Zustand relevant sind. Vorzugsweise werden mehrere dieser Eigenschaften ermittelt. Die Banknoteneigenschaften charakterisieren den Zustand der Banknoten, in diesem Beispiel den Zustand in Bezug auf die Verkehrsfähigkeit, d.h. insbesondere die maschinelle Bearbeitbarkeit mit Banknotenbearbeitungsvorrichtungen. Als Banknoteneigenschaften können insbesondere z. B. das Vorhandensein von Verschmutzungen, Flecken, Rissen, Klebestreifen, Eselsohren und/oder Löchern, und/oder das Fehlen von Bestandteilen der Banknoten und/oder die Lappigkeit der Banknoten verwendet werden. Diese Banknoteneigenschaften können in Abhängigkeit von Sensorsignalen nur eines der Sensoren oder wenigstens zweier der Sensoren ermittelt werden.

Die Steuer- und Auswerteeinrichtung 30 verfügt dazu insbesondere neben entsprechenden Schnittstellen für die Sensoren über einen Prozessor 38 und einen mit dem Prozessor 38 verbundenen Speicher 40, in dem wenigstens ein Computerprogramm mit Programmcode gespeichert ist, bei dessen Ausführung der Prozessor 38 die Vorrichtung steuert bzw. die Sensorsignale, insbesondere zur Ermittlung eines Gesamtzustands einer geprüften Banknote, auswertet und entsprechende der Auswertung die Transporteinrichtung 18 ansteuert.

Insbesondere kann die Steuer- und Auswerteeinrichtung 30, genauer der Prozessor 38 darin, nach Ermittlung der Banknoteneigenschaften ein Kriterium für den Gesamtzustand der Banknote prüfen, in das wenigstens eine der Banknoteneigenschaften eingeht bzw. das von wenigstens einer Banknoteneigenschaften abhängt. In das Kriterium können insbesondere weiter Referenzdaten zur Festlegung eines noch zulässigen Zustands der Banknote eingehen, die vorgegeben und in dem Speicher 40 gespeichert sind. Der Gesamtzustand kann beispielsweise durch zwei Kategorien "noch umlauffähig" bzw. "verkehrsfähig" oder "zu vernichten" gegeben sein. In Abhängigkeit von dem ermittelten Zustand steuert die Steuer- und Auswerteeinrichtung 30, insbesondere der Prozessor 38 darin die Transporteinrichtung 18, genauer die Weiche 20, so an, daß die Banknote entsprechend ihrem ermittelten Gesamtzustand zur Ablage in das Ausgabefach 26 oder zur Vernichtung zu dem Shredder 28 transportiert wird.

Zur Bearbeitung von Banknoten 12 werden in das Eingabefach 14 als Stapel oder einzeln eingelegte Banknoten 12 von dem Vereinzler 16 vereinzelt und vereinzelt der Transporteinrichtung 18 zugeführt, die die vereinzelten Banknoten 12 der Sensoranordnung 24 zuführt. Diese erfaßt wenigstens eine Eigenschaft der Banknoten 12, wobei Sensorsignale gebildet werden, die die Eigenschaft der Banknote wiedergeben. Die Steuer- und Auswerteeinrichtung 30 erfaßt die Sensorsignale, ermittelt in Abhängigkeit von diesen einen Zustand der jeweiligen Banknote und steuert in Abhängigkeit von dem Ergebnis die Weiche 20 so an, daß beispielsweise noch verwendbare Banknoten dem Ausgabefach 26 und zu vernichtende Banknoten dem Shredder 28 zur Vernichtung zugeführt werden.

In einem Beispiel können verschiedene Banknoteneigenschaften folgendermaßen ermittelt werden.

Die Verschmutzung der Banknoten ist durch die Abnahme der optischen Remission gekennzeichnet, vor allem in nicht bedruckten Bereichen der Banknoten. Ein Maß für die Verschmutzung der Banknoten kann somit von der Steuer- und Auswerteeinrichtung 30 beispielsweise aus den Sensorsignalen des Sensors 32 ermittelt werden. Dazu kann die Steuer- und Auswerteeinrichtung 30 einen Mittelwert für die Remissionswerte und/oder die Varianz der Remissionswerte bilden und zur Prüfung des Kriteriums verwenden.

Flecken auf den Banknoten können durch ihre Fläche und/oder den Farbkontrast zum Hintergrund charakterisiert werden. Die Fläche kann beispielsweise durch Zählung der von Flecken bedeckten, oben beschriebenen, mittels des Sensors 32 erfaßten Abtastbereichen, dann genauer Bildpunkte, von der Steuer- und Auswerteeinrichtung 30 ermittelt werden.

Risse in den Banknoten können mittels des Sensors 34, der durch die Banknoten transmittierte optische Strahlung erfaßt, erkannt werden. Zur Charakterisierung des Zustands der Banknoten kann die Steuer- und Auswerteeinrichtung 30 beispielsweise die Anzahl der Risse oder die Gesamtlänge der Risse aus den Daten des Sensors 34, insbesondere durch Zählung der Bildpunkte, ermitteln.

Löcher in den Banknoten können ebenfalls mittels des Sensors 34 erkannt werden. Zur Charakterisierung des Zustands der Banknoten kann die Steuer- und Auswerteeinrichtung 30 beispielsweise die Anzahl der Löcher oder die Gesamtfläche der Löcher aus den Signalen des Sensors 34, insbesondere durch Zählung entsprechender Bildpunkte, ermitteln.

Eselsohren in den Banknoten können ebenfalls mittels des Sensors 34 erkannt werden. Zur Charakterisierung des Zustands der Banknoten kann die Steuer- und Auswerteeinrichtung 30 beispielsweise die Anzahl der Eselsohren oder die Gesamtfläche der Eselsohren aus den Sensorsignalen des Sensors 34, insbesondere durch Zählung entsprechender Bildpunkte, ermitteln.

Klebestreifen auf den Banknoten 12 können mittels des Sensors 32, der von den Banknoten remittierte optische Strahlung erfaßt, erkannt werden. Zur Charakterisierung des Zustands der Banknoten kann die Steuer- und Auswerteeinrichtung 30 hierzu beispielsweise die Anzahl der Klebestreifen oder die Gesamtlänge bzw. Gesamtfläche der Klebestreifen aus den Sensorsignalen des Sensors 32, insbesondere durch Zählung der Bildpunkte, ermitteln.

Fehlende Teile, z. B. Sicherheitsfaden, Hologramm usw., können ebenfalls durch einen oder mehrere der Sensoren 32, 34 und 36 erkannt werden. Zur Charakterisierung des Zustands der Banknoten kann die Steuer- und Auswerteeinrichtung 30 beispielsweise die Anzahl der fehlenden Teile oder die Gesamtfläche der fehlenden Teile aus den Sensorsignalen des oder der Sensoren 32, 34 und 36 ermitteln.

Der Zustand im Hinblick auf die Lappigkeit wird mittels des Sensors 36 ermittelt, wie im Folgenden genauer beschrieben wird.

Zur Ermittlung des Gesamtzustands der Banknoten verwendet die Steuerund Auswerteeinrichtung 30 das bereits erwähnte Kriterium, in das wenigstens eine der Eigenschaften eingehen kann. Dazu wird den einzelnen unterschiedlichen Eigenschaften jeweils ein bestimmter Wert zugeordnet, der den Zustand im Hinblick auf diese Eigenschaft charakterisiert. Beispielsweise wird einer bestimmten Verschmutzung ein bestimmter Wert zugeordnet. Der selbe bestimmte Wert kann aber auch einer oder allen anderen Eigenschaften zugeordnet werden, so daß auch z. B. einer bestimmte Anzahl von Flecken, einer bestimmten Lappigkeit, einer bestimmte Anzahl von Rissen, Klebestreifen, Eselsohren, Löchern, fehlenden Teilen der Banknote usw. der bestimmte Wert zugeordnet wird. Die einzelnen Werte können in einem beispielhaften Kriterium verknüpft werden, beispielsweise mittels einer Linearkombination. Die Steuer- und Auswerteeinrichtung 30 vergleicht dann zur Ermittlung des Gesamtzustands der Banknoten die Linearkombination der den Zustand der Banknoten charakterisierenden Eigenschaften mit einem vorgegebenen Wert und entscheidet beispielsweise ob der Zustand der Banknoten gut oder schlecht ist, d. h. ob sie umlauffähig sind oder nicht. Dadurch wird erreicht, daß eine Banknote, die bereits eine erhebliche Verschmutzung aufweist, die aber für sich allein noch nicht dazu führen würde, daß der Zustand der Banknote als schlecht ermittelt werden würde, als schlecht ermittelt wird, wenn die Banknote zusätzlich z. B. auch nur wenige Flecken und/oder Risse usw. aufweist.

Es ist offensichtlich, daß bei der Linearkombination der Eigenschaften und/oder der Zuordnung der den Zustand der Banknoten charakterisierenden Werte zu den einzelnen Eigenschaften eine Gewichtung vorgenommen werden kann. Bestimmte Eigenschaften, z. B. Risse oder Löcher in den Banknoten, können dabei stärker gewichtet werden als andere, weniger störende Eigenschaften, z. B. Eselsohren oder Flecken. Ebenso ist offensichtlich, daß statt einer Linearkombination andere mathematische Kombinationen für die Bewertung der Eigenschaften verwendet werden können.

In diesem ersten Ausführungsbeispiel wird jedoch zur Ermittlung des Gesamtzustands nur der Zustandswert in Bezug auf die Lappigkeit verwendet.

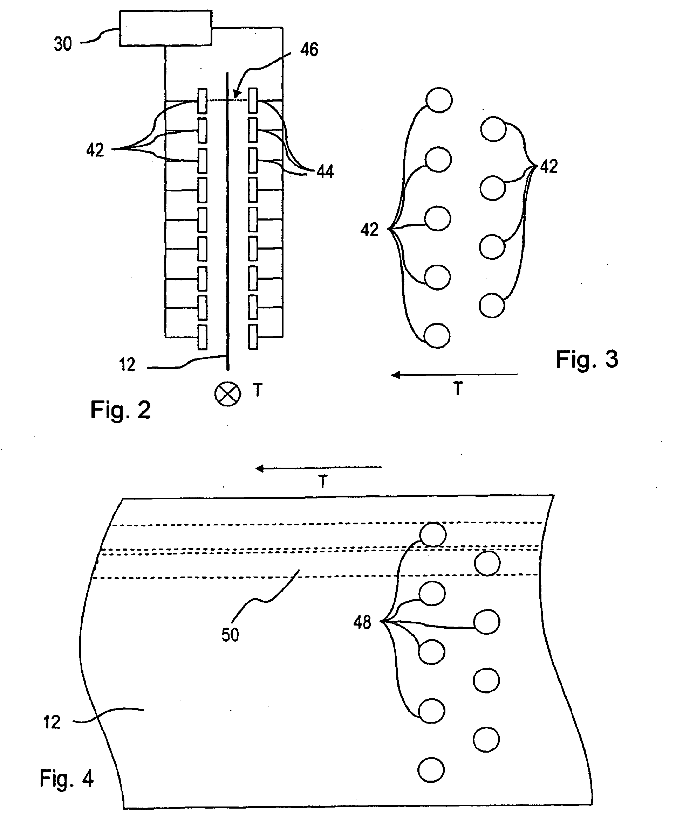

Der Sensor 36 zur Ermittlung der Lappigkeit ist im Beispiel folgender maßen aufgebaut (vgl. Fig. 2 und 3).

Der Sensor 36 verfügt über mehrere, sowohl quer zu einer Transportrichtung T der Banknoten 12 als auch längs zu dieser im wesentlichen in einer Ebene parallel zu einer entlang des Transportpfads 22 der transportierten Banknote 12 angeordnete, von der Steuer- und Auswerteeinrichtung 30 angesteuerte Ultraschallwandler 42 zur Abgabe von Ultraschallpulsen auf die Banknote. Diese Ultraschallwandler 42 dienen somit als Ultraschallsender.

Den Ultraschallwandlern bzw. -sendern 42 in Bezug auf den Transportpfad 22 gegenüber sind in gleicher Zahl als Ultraschallempfänger dienende Ultraschallwandler 44, die mit der Steuer- und Auswerteeinrichtung 30 über in den Figuren nicht gezeigte Schnittstellen und schematisch gezeigte Signalverbindungen so angeordnet, daß diese von einer entlang des Transportpfads 22 transportierten Banknote 12 ausgehenden, durch Beschallung mit Ultraschallpulsen der Ultraschallsender 42 hervorgerufene Ultraschallwellen empfangen können.

Jedem der Ultraschallsender 42 ist dabei einer der Ultraschallempfänger 44 so zugeordnet, daß zwischen diesen eine wenigstens näherungsweise orthogonal zu einer entlang des Transportpfads 22 transportierten Banknote 12 verlaufende Ultraschallstrecke 46 ergibt, entlang derer ein von dem jeweiligen Ultraschallsender 42 abgegebener Ultraschallpuls zu dem diesem zugeordneten Ultraschallempfänger 44 läuft. Mit jedem Paar von Ultraschallsendem und diesen zugeordneten Ultraschallempfängern bzw. mit jeder Ultraschallstrecke 46 in Verbindung mit der Steuer- und Auswerteeinrichtung 30 ist damit ein Wert für die Ultraschalltransmission der Banknote 12 an dem beschallten Ort ermittelbar.

Die Ultraschallwandler 42 bzw. 44 sind so ausgebildet, daß sie zur Abgabe bzw. zum Empfang von Ultraschallpulsen mit einer Dauer im Bereich von im Beispiel etwa 30 μs und einer Ultraschallfrequenz, d.h. einem Frequenzmaximum des Spektrums des Ultraschallpulses, von im Beispiel etwa 400 kHz gut geeignet sind. Weiter sind sie so dimensioniert, daß jeweils ein auf einer entlang des Transportpfads 22 transportierten Banknote 12 bei Beschallung mit den Ultraschallpulsen beschallter Fleck 48, d.h. Abtastbereich, einen Durchmesser von etwa 2 mm aufweist. Jedem der Abtastbereiche ist als Ort der Mittelpunkt des Abtastbereiches zugeordnet.

Die Ultraschallsender und -empfänger 42 bzw. 44 sind in zur der Banknote 12 in dem Transportpfad 22 parallelen Ebenen so angeordnet, daß Werte für die Ultraschalltransmission für sich parallel zu der Transportrichtung T erstreckende streifenförmige Erfassungsbereiche 50 erfaßbar sind, wie in Fig. 4 für eine Momentaufnahme während der Erfassung dargestellt.

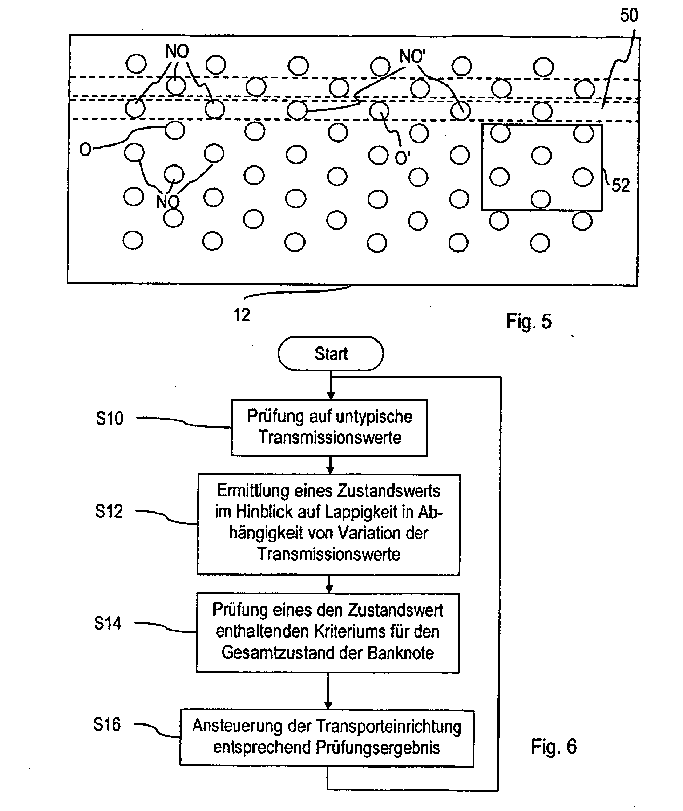

Insgesamt kann sich damit eine für eine Banknote 12 schematisch in Fig. 4 und insbesondere Fig. 5 dargestellte Verteilung von Abtastbereichen 48 bzw. Orten ergeben, für die Transmissionswerte erfaßbar sind, wenn die Banknote 12 mit konstanter geeignet vorgegebener Geschwindigkeit durch die Ultraschallstrecken 46 transportiert wird und während des Transports in vorgegebenen Zeitabständen Transmissionswerte erfaßt werden. In diesem Ausführungsbeispiel erfolgt die Ansteuerung unabhängig von dem Eintritt einer Banknote 12 in den Erfassungsbereich des Sensors 36. Zur Unterdrückung eines unerwünschten Empfangs von Ultraschallpulsechos kann der jeweilige Ultraschallempfänger für eine Ultraschallstrecke gegenüber dem Zeitpunkt der Abgabe des Ultraschallpulses durch den Ultraschallsender für die Ultraschallstrecke um etwas weniger als die Pulslaufzeit für die Ultraschallstrecke verzögert eingeschaltet und vor der doppelten Pulslaufzeit seit der Abgabe wieder abgeschaltet werden.

Es ergibt sich so eine regelmäßige Anordnung der Abtastbereiche bzw. Orte auf der Banknote 12, im Beispiel eine im Wesentlichen hexagonale Anordnung. Die Anordnung der Ultraschallsender und -empfänger 42 bzw. 44 ist so gewählt, daß der Abstand aufeinander folgender Orte in einem der Streifen bzw. Erfassungsbereiche 50 kleiner als 1 cm ist. Im Beispiel beträgt dazu der Abstand nächstbenachbarter Orte etwa 1 cm.

Der Sensor 36 verfügt im Ausführungsbeispiel insbesondere über vierundzwanzig Ultraschallsender /-empfänger-Paare bzw. Ultraschallstrecken 46, die so angeordnet sind, daß die Erfassungsbereiche 50 bzw. Spuren einen Abstand zwischen 3 und 4 mm aufweisen.

Zur Erfassung der Transmissionswerte erfaßt die Steuer- und Auswerteeinrichtung 30 in konstanten Zeitabständen die Sensorsignale der Ultraschallempfänger 44, die die Intensität bzw. Leistung einzelner empfangener Ultraschallpulse als Funktion der Zeit und damit wegen der konstanten Transportgeschwindigkeit auch des Ortes wiedergeben. Anhand dieser Signale ermittelt die Steuer- und Auswerteeinrichtung 30 auch das Eintreten eines Wertdokuments in den Erfassungsbereich des Sensors 36. Die Transmissionswerte sind dabei unter der Annahme einer grundsätzlich konstanten Sendeleistung der Ultraschallsender 42 einfach durch die empfangenen Ultraschallpulsenergien gegeben. In anderen Ausführungsbeispielen ist es jedoch auch möglich, die empfangenen Ultraschallpulsenergien durch eine vorgegebene oder gemessene Ultraschallpulsenergie gesendeter Pulse zu dividieren und damit normierte Transmissionswerte zu erhalten.

Die ermittelten Transmissionswerte werden den Orten, für die sie erfaßt wurden, zugeordnet gespeichert. Dies kann beispielsweise in der Art erfolgen, daß für jeden der Erfassungsbereiche 50 getrennt die Transmissionswerte in der zeitlichen Reihenfolge ihrer Erfassung in dem Speicher 40 gespeichert werden. Der Erfassungsbereich 50 entspricht dann einer Koordinate in einer Richtung quer zur Transportrichtung und die Stellung in der Reihe entlang des Erfassungsbereichs 50 einer Koordinate in Transportrichtung T.

Die Frequenz, mit der die Ultraschallpulse nacheinander abgegeben werden, und Transportgeschwindigkeit der Banknote sind so gewählt, daß entlang der Transportrichtung der Banknote in jedem Erfassungsbereich 50 wenigstens fünf Transmissionswerte erfaßt werden. Im Beispiel werden Transmissionswerte im Abstand von 3 mm, vorzugsweise 2 mm, entlang der Transportrichtung oder 50 oder mehr Transmissionswerte erfaßt.

Ausgehend von diesen für eine Banknote als Funktion des Ortes vorliegenden Transmissionswerten führt die Steuer- und Auswerteeinrichtung 30, genauer der Prozessor 38 nun bei der Abarbeitung von Programmcode des in dem Speicher 40 gespeicherten Computerprogramms folgendes Verfahren zur Ermittlung des Zustands der Banknote aus. Das Verfahren ist grob schematisch in Fig. 6 als Ablaufdiagramm veranschaulicht.

In Schritt S10, der im Prinzip optional ist, aber in diesem Ausführungsbeispiel als bevorzugte Variante durchgeführt wird, werden die Transmissionswerte daraufhin überprüft, ob sie gemäß einem vorgegebenen Ausreißerkriterium als untypisch gelten. Solche Werte können beispielsweise durch Löcher oder Risse in der Banknote verursacht sein, die zu sehr hohen Transmissionswerten führen.

In diesem Ausführungsbeispiel wird als Ausreißerkriterium geprüft, ob einer der Transmissionswerte innerhalb eines vorgegebenen Wertebereich liegt. Insbesondere wird dazu ein Mittelwert über alle Transmissionswerte gebildet und geprüft, ob die Abweichung des jeweiligen Transmissionswerts von dem Mittelwert, hier deren Abstand voneinander, beispielsweise gegeben durch den Betrag der Differenz von Transmissionswert und Mittelwert, kleiner als ein vorgegebener Schwellwert ist. Der Schwellwert kann beispielsweise in Dezibel ausgedrückt werden und dann den Wert von etwa 2 db annehmen, wenn die Transmissionswerte so normiert sind, daß für einen ungeschwächten Ultraschallpuls der Transmissionswert 1 ermittelt wird.

In dem folgenden Schritt S12 ermittelt die Steuer- und Auswerteeinrichtung 30, genauer der Prozessor 38 darin, aus den erfaßten Transmissionswerten, die die Ultraschalltransmission an verschiedenen Orten auf der Banknote wiedergeben und nicht als Ausreißer erkannt wurden, einen Zustandswert, der von einer Variation der Transmissionswerte abhängt und den Zustand der Banknote im Hinblick auf Lappigkeit charakterisiert. In diesem Ausführungsbeispiel wird als Zustandswert die Varianz der Transmissionswerte über alle Orte ermittelt.

Die Schritte S10 und S12 werden hier nacheinander ausgeführt, können aber auch miteinander verschachtelt ausgeführt werden, wenn eine höhere Verarbeitungsgeschwindigkeit gewünscht ist.

In Schritt S14 ermittelt die Steuer- und Auswerteeinrichtung unter Verwendung eines vorgegebenen Kriteriums für den ermittelten Zustandswert einen Zustand der Banknote, der hier auch als Gesamtzustand bezeichnet wird. In diesem Ausführungsbeispiel wird als Kriterium das Schwellwertkriterium geprüft, ob der Zustandswert für die Lappigkeit, d.h. hier die Varianz, einen vorgegebenen, durch Versuche ermittelten maximalen Schwellwert überschreitet. Selbstverständlich können auch dazu äquivalente Formulierungen der Bedingung verwendet werden.

Wird das Schwellwertkriterium erfüllt, d.h. hier der Schwellwert von dem Zustandswert überschritten, wird die Banknote als "zu vernichten" eingestuft und die Steuer- und Auswerteeinrichtung 30 steuert die Transporteinrichtung 18, genauer die Weiche 20 so an, daß die Banknote dem Shredder 28 zugeführt wird, wo sie vernichtet wird.

Andernfalls wird die Banknote als "verkehrsfähig" erkannt und die Steuerund Auswerteeinrichtung 30 steuert in Schritt S16 die Transporteinrichtung 18, genauer die Weiche 20 so an, daß die Banknote in das Ausgabefach 26 ausgegeben wird. Sie kann nun wieder in Umlauf gebracht werden.

Das Programm springt dann zurück zu Schritt S10, um die nächste Banknote zu beurteilen.

Eine zweite bevorzugte Ausführungsform unterscheidet sich von dem ersten Ausführungsbeispiel nur durch den Programmcode in dem Speicher 40 und damit dem Verfahren. Alle anderen Merkmale sind unverändert und die Erläuterungen zu dem ersten Ausführungsbeispiel gelten auch hier entsprechend.

Das Computerprogramm enthält nun Programmcode, bei dessen Ausführung der Prozessor 38 statt der Schritte S12 und S14 im ersten Ausführungsbeispiel die im Folgenden beschriebenen Schritte S18 und S20 ausführt.

Bei diesem Ausführungsbeispiel wird der Zustandswert nicht für alle Transmissionswerte, die das Ausreißerkriterium nicht erfüllen, gemeinsam ermittelt, sondern für jeden der Erfassungsbereiche 50, bzw. jeden der Streifen, werden getrennt Bereichszustandswerte ermittelt. Für einen ersten Erfassungsbereich 50 wird somit ein Bereichzustandswert ermittelt und für verschiedene weitere Orte auf der Banknote in einem zweiten Erfassungsbereich, beispielsweise dem direkt benachbarten Erfassungsbereich bzw. Streifen ein weiterer Bereichszustandswert, der von einer Variation der weiteren Transmissionswerte für die weiteren Orte abhängt. Entsprechendes erfolgt für die anderen Erfassungsbereiche. Diese Ermittlung der Bereichszustandswerte erfolgt in Schritt S18.

Auf der Basis der Bereichszustandswerte, die in diesem Ausführungsbeispiel ebenfalls als Varianz ermittelt werden, wird nun in Schritt S20 die Prüfung des Kriteriums für den Zustand der Banknote durchgeführt.

Dazu wird in diesem Ausführungsbeispiel geprüft, ob der Mittelwert der Bereichszustandswerte, der als Zustandswert im Hinblick auf die Lappigkeit aufgefaßt werden kann, das Schwellwertkriterium des ersten Ausführungsbeispiels, gegebenenfalls mit einem anderen Schwellwert, erfüllt.

Im Wesentlichen wird daher in Schritt S20 die gleiche Prüfung wie im ersten Ausführungsbeispiel in Schritt S14 durchgeführt, wobei jedoch als Zustandswert der Mittelwert der Bereichszustandswerte verwendet wird.

In den zuvor geschilderten Ausführungsbeispielen wurde zur Ermittlung des Zustandswertes bzw. der Bereichszustandswerte die Varianz berechnet, die ein Maß für die Abweichung der Transmissionswerte von dem Mittelwert ist und insofern die flächige Verteilung der Orte nicht direkt berücksichtigt.

Eine dritte und eine vierte bevorzugte Ausführungsform unterscheiden sich von dem ersten bzw. dem zweiten Ausführungsbeispiel dadurch, daß in Schritt S12 bzw. in Schritt S18 zur Berücksichtigung der Variation der Transmissionswerte Abweichungen von Transmissionswerten für verschiedene Orte voneinander, d.h. Abweichungen zwischen Transmissionswerten für verschiedene Orte verwendet werden. Hierzu verfügt das Computerprogramm in dem Speicher 40 nur über entsprechenden Programmcode, bei dessen Ausführung der Prozessor 38 die folgenden Schritte abarbeitet. Alle anderen Merkmale sind unverändert und die Erläuterungen zu den Ausführungsbeispielen gelten auch hier entsprechend.

Genauer werden in diesen Schritten als Abweichungen zwischen Transmissionswerten für verschiedene Orte nur Abweichungen zwischen Transmissionswerten für Orte verwendet, deren Abstand nicht größer als ein vorgegebener Maximalabstand ist. In diesen Ausführungsbeispielen ist der Maximalabstand der Abstand nächster Nachbarorte, für das dritte Ausführungsbeispiel sind für einen Ort O die nächsten Nachbarn demnach die Orte NO des den betrachteten Ort O umgebenden kleinsten Sechsecks und für das vierte Ausführungsbeispiel die nächstbenachbarten Orte NO' in Fig. 5 rechts und links eines Ortes O'.

Weiter wird als Abweichung der Betrag der Differenz verwendet. Bezeichnen N die Anzahl der nächsten Nachbarn für einen Erfassungsbereich für den Ort x, die Orte $x_i$, i=1,...N die Erfassungsbereiche bzw. Orte der nächsten Nachbarorte und T(y) den Transmissionswert an einem beliebigen Ort y, so ergibt sich der Zustandswert bzw. der Bereichszustandswert zu

$$\frac{1}{M} \sum_X \sum_{i=1}^{N} |T(x_i) - T(x)|,$$

wobei x über die Menge M der Orte läuft, die zur Ermittlung des Zustandswertes bzw. des Bereichszustandswertes verwendet werden. Für das dritte Ausführungsbeispiel sind dies die Orte auf der Banknote, für das vierte Ausführungsbeispiel die Orte in einem Erfassungsbereich 50. Treten in der Summe Orte auf, für die kein gemäß dem Ausreißerkriterium verwendbarer Transmissionswert vorliegt, so wird der entsprechende Summand weggelassen und die Zahl M um 1 erniedrigt.

Weitere bevorzugte Ausführungsformen unterscheiden sich von den zuvor geschilderten Ausführungsbeispielen nur durch das Computerprogramm, das nun Programmcode enthält, bei dessen Ausführung der Prozessor 38 den Schritt S14 durch den im folgenden geschilderten Schritt ersetzt. Alle anderen Merkmale sind unverändert und die Erläuterungen zu den Ausführungsbeispielen gelten auch hier entsprechend.

In das Kriterium zur Ermittlung des Gesamtzustands einer Banknote geht nun nicht nur der Zustandswert im Hinblick auf die Lappigkeit ein, sondern es werden auch weitere Eigenschaften der Banknote, die mittels der Sensoren 32, 34 und 36 wie zuvor geschildert ermittelt wurden, beispielsweise das Vorhandensein von Löchern, Rissen, Klebestreifen und Flecken ermittelt und in dem Kriterium berücksichtigt. Beispielsweise kann für jede dieser Eigenschaften ein entsprechender Zustandswert ermittelt werden, und als Kriterium wird geprüft, ob der Mittelwert über die Zustandswerte für die anderen Eigenschaften und den Gesamtzustandswert kleiner als ein vorgegebener, durch Versuche ermittelter Schwellwert ist. Ist das Kriterium erfüllt, so ist der Zustand der Banknoten "zu vernichten", andernfalls ist der Zustand "verkehrsfähig".

Bei den zuvor geschilderten Ausführungsbeispielen wurde davon ausgegangen, daß die Transmissionswerte für Orte auf der Banknote erfaßt werden, die diese im wesentlich gleichmäßig und bis auf einen möglichen Randbereich vollständig abdecken. Banknoten können jedoch Bereiche aufweisen, in denen die Transmission für Ultraschall systematisch gegenüber anderen Bereichen geändert ist. Dies trifft beispielsweise für das Wasserzeichen 52 zu, das in Fig. 5 durch ein Rechteck symbolisiert ist.

Weitere bevorzugte Ausführungsformen unterscheiden sich von den zuvor geschilderten Ausführungsbeispielen dann allein dadurch, bei der Ermittlung des Zustandswertes Transmissionswerte für Orte in einem vorgegebenen Bereich der Banknote, im Beispiel im Bereich des Wasserzeichens 52, nicht oder mit geringerer Gewichtung als solche für Orte außerhalb des Bereichs, d.h. Wasserzeichens, verwendet werden. Dazu verfügt die Vorrichtung über eine Einrichtung zur Ermittlung eines Typs, beispielsweise der Denomination, einer zugeführten Banknote und in dem Speicher sind Daten abgelegt, die die Lage des Wasserzeichens auf einer Banknote des jeweiligen Typs wiedergeben. Darüber hinaus ist eine Einrichtung vorgesehen, die die Orientierung der Banknoten in der Transporteinrichtung 18 ermittelt. Diese kann beispielsweise durch den Sensor 32 und entsprechenden Programmcode in dem Computerprogramm gebildet sein. Weiter ist das Computerprogramm dahingehend modifiziert, daß bei der Ermittlung der Zustandswerte bzw. Bereichszustandswerte die Beiträge zu den Summen gewichtet werden, wobei für Summanden, in denen die Transmission für einen Ort im Bereich des Wasserzeichens auftritt, nur gering gewichtet oder in anderen Ausführungsbeispielen ganz weggelassen werden. Alle anderen Schritte sind unverändert. Diese Orte werden anhand des Typs der Banknote, der gespeicherten Lagedaten für das Wasserzeichen 52 und die Orientierung der Banknote ermittelt.

Bei einer anderen bevorzugten Ausführungsform können bei der Ermittlung des Zustandswertes Transmissionswerte für Orte in einem vorgegebenen Bereich, im Beispiel außerhalb des Wasserzeichens 52, stärker gewichtet werden als Transmissionswerte für Orte im Bereich des Wasserzeichens 52.

Eine weitere bevorzugte Ausführungsform unterscheidet sich von den vorhergehenden Ausführungsbeispielen dadurch, daß eine systematische Änderung der Transmission nicht durch eine Änderung der Gewichtung der entsprechenden Beiträge zu dem Zustands- bzw. Bereichszustandswert ermittelt wird, sondern eine "Korrektur" in dem Sinne durchgeführt wird, daß die korrigierten Transmissionswerte in guter Näherung nur noch statistisch aufgrund der Lappigkeit variieren. Hierzu sind im Unterschied zu den Ausführungsbeispielen mit besonderer Berücksichtigung des Wasserzeichens nicht deren Lagedaten gespeichert, sondern ein vorgegebenes, als Referenz dienendes Transmissionsprofil der Banknote, das beispielsweise über eine große Anzahl von druckfrischen bzw. unbenutzten Banknoten eines vorgegebenen Typs gemittelte Transmissionswerte als Funktion des Ortes aufweist. Die Darstellung des vorgegebenen Transmissionsprofils kann durch eine Tabelle oder durch eine parametrische Darstellung erfolgen. Alle anderen Merkmale sind unverändert und die Erläuterungen zu den letzten beiden Ausführungsbeispielen gelten auch hier entsprechend.

Das Computerprogramm enthält nun Programmcode, bei dessen Ausführung der Prozessor, je nach Ausführung, vor oder bei der Ermittlung des Zustandswertes bzw. der Bereichszustandswerte den ermittelten Transmissionswerten zur Korrektur dem Transmissionsprofil entsprechende Werte subtrahiert.

Alle folgenden Schritte bleiben unverändert.

Bei weiteren Ausführungsbeispielen kann in den Zustandswert bzw. der Bereichszustandswerten zur Berücksichtigung der Variation ein Spektrum der Transmissionswerte verwendet werden. Insbesondere kann ein Leistungsspektrum der Transmissionswerte ermittelt werden, wozu insbesondere bekannte Algorithmen der schnellen Fourier-Transformation (FFT) verwendet werden können.

Bei weiteren alternativen Ausführungsformen kann zur Berücksichtigung der Variation eine Verteilungsfunktion der Transmissionswerte ermittelt und verwendet werden. Nach der Ermittlung der Verteilungsfunktion, d.h. der Anzahl der Transmissionswerte in vorgegebenen Bins, kann beispielsweise die Halbwertsbreite der Verteilungsfunktion ermittelt und als Zustandswert bzw. Bereichszustandswert verwendet werden.

Eine andere bevorzugte Ausführungsform unterscheidet sich von dem ersten Ausführungsbeispiel dadurch, daß die Ultraschallwandler so ausgebildet sind, daß sie zur Abgabe bzw. zum Empfang von Ultraschallpulsen mit einer Dauer im Bereich von etwa 45 $\mu$s und einer Ultraschallfrequenz, d.h. einem Frequenzmaximum des Spektrums des Ultraschallpulses, von etwa 300 kHz gut geeignet sind. Weiter sind sie so dimensioniert, daß ein auf einer entlang des Transportpfads 22 transportierten Banknote bei Beschallung mit den Ultraschallpulsen beschallter Fleck einen Durchmesser von etwa 3 mm aufweist.

Bei anderen Ausführungsformen können die Ultraschallstrecken gegenüber der Ebene der zu untersuchenden Banknote auch geneigt sein, um bei der Verwendung von Ultraschallpulsen den Einfluß von Echos zu vermeiden.

Weiter kann der Ultraschall statt in Pulsen auch kontinuierlich abgegeben werden. In diesem Fall sind die Ultraschallstrecken gegenüber der zu untersuchenden Banknote vorzugsweise ebenfalls geneigt, um das Auftreten von stehenden Wellen zu vermeiden.

**Patentansprüche**

1. Verfahren zur Beurteilung eines Zustands wenigstens eines Wertdokuments (12) im Hinblick auf Lappigkeit, bei dem
   aus Transmissionswerten, die die Ultraschalltransmission an verschiedenen Orten (O; O') auf dem Wertdokument (12) wiedergeben, ein Zustandswert ermittelt wird, der von einer Variation der Transmissionswerte abhängt und den Zustand des Wertdokuments (12) im Hinblick auf Lappigkeit charakterisiert, und
   unter Verwendung eines vorgegebenen Kriteriums für den Zustandswert ein Zustand des Wertdokuments (12) ermittelt wird.

2. Verfahren nach Anspruch 1, bei dem Ultraschallpulse auf wenigstens zwei verschiedene Orte (O; O') auf dem Wertdokument (12) abgegeben werden und von den Orten (O; O') auf die Ultraschallpulse hin ausgehende Ultraschallpulse unter Bildung der Transmissionswerte erfaßt werden.

3. Verfahren nach Anspruch 1 oder 2, bei dem der Ultraschall eine Ultraschallfrequenz größer als 300 kHz aufweist und/oder bei dem durch den Ultraschall jeweils beschallte Flecken des Wertdokuments (12) einen Durchmesser kleiner als 3,5 mm aufweisen

4. Verfahren nach einem der Ansprüche 1 bis 3, bei dem die Orte (O; O') regelmäßig verteilt sind.

5. Verfahren nach einem der vorhergehenden Ansprüche, bei dem die Orte (O; O') innerhalb eines linearen Streifens, vorzugsweise parallel zu einer Transportrichtung (T) der Wertdokumente, angeordnet sind und/oder bei dem die Orte (O; O') innerhalb von wenigstens zwei Streifen angeordnet sind.

6. Verfahren nach einem der vorhergehenden Ansprüche, bei dem aus weiteren Transmissionswerten für verschiedene weitere Orte (O; O') auf dem Wertdokument (12) ein weiterer Zustandswert ermittelt wird, der von einer Variation der weiteren Transmissionswerte für die weiteren Orte (O; O') abhängt, und in das vorgegebene Kriterium zusätzlich der weitere Zustandswert eingeht.

7. Verfahren nach einem der vorhergehenden Ansprüche, bei dem bei der Ermittlung des Zustandswertes Transmissionswerte für Orte (O; O') in einem vorgegebenen Bereich des Wertdokuments (12) nicht oder mit geringerer Gewichtung als solche für Orte (O; O') außerhalb des Bereichs verwendet werden und/ oder bei dem bei der Ermittlung des Zustandswertes Transmissionswerte für Orte (O; O') in einem vorgegebenen Bereich stärker gewichtet werden als Transmissionswerte für andere Orte (O; O').

8. Verfahren nach einem der vorhergehenden Ansprüche, bei dem vor oder bei der Ermittlung des Zustandswertes die Transmissionswerte in Bezug auf ein für das Wertdokument (12) vorgegebenes Transmissionsprofil korrigiert werden.

9. Verfahren nach einem der vorhergehenden Ansprüche, bei dem zur Berücksichtigung der Variation Abweichungen der Transmissionswerte von einem vorgegebenen Wert, vorzugsweise einem Mittelwert der Transmissionswerte, verwendet werden.

10. Verfahren nach einem der vorhergehenden Ansprüche, bei dem zur Berücksichtigung der Variation Abweichungen zwischen Transmissionswerten für verschiedene Orte (O; O') verwendet werden und bei dem vorzugsweise als Abweichungen zwischen Transmissionswerten für verschiedene Orte (O; O') nur Abweichungen zwischen Transmissionswerten für Orte (O; O') verwendet werden, deren Abstand nicht größer als ein vorgegebener Maximalabstand ist.

11. Verfahren nach einem der vorhergehenden Ansprüche, bei dem zur Berücksichtigung der Variation ein Spektrum der Transmissionswerte verwendet wird.

12. Auswerteeinrichtung zur Beurteilung eines Zustands wenigstens eines Wertdokuments (12) im Hinblick auf Lappigkeit, die so ausgebildet ist, daß sie aus Transmissionswerten, die die Ultraschalltransmission an verschiedenen Orten (O; O') auf dem Wertdokument (12) wiedergeben, einen Zustandswert ermittelt, der von einer Variation der Transmissionswerte abhängt und den Zustand des Wertdokuments (12) im Hinblick auf Lappigkeit charakterisiert, und unter Verwendung eines vorgegebenen Kriteriums für den Zustandswert einen Zustand des Wertdokuments (12) ermittelt.

13. Auswerteeinrichtung nach Anspruch 12, die einen Prozessor (38), einen Speicher (40), in dem ein Computerprogramm nach Anspruch 25 zur Ausführung durch den Prozessor (38) gespeichert ist, und eine Schnittstelle zur Erfassung von Signalen oder Daten, aus denen die Transmissionswerte und/oder die Variation der Transmissionswerte ermittelbar sind oder die die Transmissionswerte wiedergeben, umfaßt.

14. Auswerteeinrichtung nach Anspruch 12 oder 13, die dazu ausgebildet ist, aus weiteren Transmissionswerten für verschiedene weitere Orte (O; O') auf dem Wertdokument (12) einen weiteren Zustandswert zu ermitteln, der von einer Variation der weiteren Transmissionswerte für die weiteren Orte (O; O') abhängt, und bei der in das vorgegebene Kriterium zusätzlich der weitere Zustandswert eingeht.

15. Auswerteeinrichtung nach einem der Ansprüche 12 bis 14, die weiter so ausgebildet ist, daß bei der Ermittlung des Zustandswertes Transmissionswerte für Orte (O; O') in einem vorgegebenen Bereich des Wertdokuments (12) nicht oder mit geringerer Gewichtung als solche für Orte (O; O') außerhalb des Bereichs verwendet werden und/oder die weiter so ausgebildet ist, daß bei der Ermittlung des Zustandswertes Transmissionswerte für Orte (O; O') in einem vorgegebenen Bereich stärker gewichtet werden als Transmissionswerte für andere Orte (O; O').

16. Auswerteeinrichtung nach einem der Ansprüche 12 bis 15, die weiter so ausgebildet ist, daß vor oder bei der Ermittlung des Zustandswertes die Transmissionswerte in Bezug auf ein für das Wertdokument (12) vorgegebenes Transmissionsprofil korrigiert werden.

17. Auswerteeinrichtung nach einem der Ansprüche 12 bis 16, die dazu ausgebildet ist, zur Berücksichtigung der Variation Abweichungen der Transmissionswerte von einem vorgegebenen Wert, vorzugsweise einem Mittelwert der Transmissionswerte, zu verwenden.

18. Auswerteeinrichtung nach einem der Ansprüche 12 bis 17, die dazu ausgebildet ist, zur Berücksichtigung der Variation Abweichungen zwischen Transmissionswerten für verschiedene Orte (O; O') zu verwenden und vorzugsweise als Abweichungen zwischen Transmissionswerten für verschiedene Orte (O; O') nur Abweichungen zwischen Transmissionswerten für Orte (O; O') zu verwenden, deren Abstand nicht größer als ein vorgegebener Maximalabstand ist.

19. Auswerteeinrichtung nach einem der Ansprüche 12 bis 18, die dazu ausgebildet ist, zur Berücksichtigung der Variation ein Spektrum der Transmissionswerte zu verwenden.

20. Vorrichtung zur Beurteilung eines Zustands wenigstens eines blattförmigen Wertdokuments (12) im Hinblick auf Lappigkeit mit wenigstens einem Ultraschallsender (42) und einem Ultraschallempfänger (44), die sich gegenüberliegend eine Ultraschallstrecke (46) für eine Erfassung der Transmission an einem Ort auf dem Wertdokument (12) bilden, einer Auswerteeinrichtung (30) nach einem der Ansprüche 12 bis 19, und einer Schnittstelle zwischen dem Ultraschallempfänger (44) und der Auswerteeinrichtung (30), mittels derer Transmissionnssignale des Ultraschallempfängers (44), die Transmissionswerte darstellen, der Auswerteeinrichtung (30) zur Beurteilung des Zustands des Wertdokuments (12) zugeführt werden, wobei die Auswerteeinrichtung vorzugsweise mit dem Ultraschallsender zu dessen Ansteuerung verbunden und dazu ausgebildet ist, den Ultraschallsender zur Abgabe von Ultraschallpulsen anzusteuern.

21. Vorrichtung Anspruch 20, bei der der Ultraschallsender (42) dazu ausgebildet ist, Ultraschall mit einer Ultraschallfrequenz größer als 300 kHz abzugeben und/oder bei der der Ultraschallsender (42) zur Abgabe von Ultraschall ausgebildet ist, der bei Auftreffen auf ein in einem vorgegeben Abstand von dem Ultraschallsensor angeordnetes Wertdokument (12) einen Fleck mit einem Durchmesser kleiner als 3,5 mm beschallt.

22. Vorrichtung nach einem der Ansprüche 20 oder 21, die eine Transporteinrichtung zum Transport des Wertdokuments (12) durch die Ultraschallstrecke (46) aufweist und bei der die Auswerteeinrichtung dazu ausgebildet ist, nacheinander an wenigstens fünf verschiedenen Orten (O; O') auf dem Wertdokument (12) entsprechende Transmissionswerte zu erfassen und diese auszuwerten.

23. Vorrichtung nach einem der Ansprüche 20 bis 22, die wenigstens eine weitere Ultraschallstrecke (46) umfaßt und bei der die Auswerteeinrichtung dazu ausgebildet ist, entlang der weiteren Ultraschallstrecke (46) erfaßte Transmissionssignale auszuwerten.

24. Vorrichtung nach einem der Ansprüche 20 bis 23, die wenigstens einen weiteren Ultraschallempfänger (44) zur Erfassung von Transmissionswerten aufweist, der in einer vorgegebenen Richtung von dem wenigstens einen Ultraschallempfänger (44) beabstandet ist.

25. Computerprogramm zur Ausführung mittels einer Datenverarbeitungseinrichtung mit einem Prozessor (38), das Programmcode enthält, bei dessen Ausführung der Prozessor (38) das Verfahren nach einem der Ansprüche 1 bis 11 ausführt, und insbesondere aus Transmissionswerten, die die Ultraschalltransmission an verschiedenen Orten (O; O') auf dem Wertdokument (12) wiedergeben, ein Zustandswert ermittelt, der von einer Variation der Transmissionswerte abhängt und den Zustand des Wertdokuments (12) im Hinblick auf Lappigkeit charakterisiert, und unter Verwendung eines vorgegebenen Kriteriums für den Zustandswert einen Zustand des Wertdokuments (12) ermittelt.

26. Computerlesbarer Datenträger, auf dem ein Computerprogramm nach Anspruch 25 gespeichert ist.

**Claims**

1. A method for assessing a condition of at least one value document (12) with regard to limpness, wherein
there is determined from transmission values representing the ultrasound transmission at different places (O; O') on the value document (12) a condition value which depends on a variation of the transmission values and characterizes the condition of the value document (12) with regard to limpness, and a condition of the value document (12) is determined for the condition value using a preset criterion.

2. The method according to claim 1, wherein ultrasound pulses are emitted onto at least two different places (O; O') on the value document (12), and ultrasound pulses emanating from the places (O; O') as a result of the ultrasound pulses are detected so as to form the transmission values.

3. The method according to claim 1 or 2, wherein the ultrasound has an ultrasound frequency greater than 300 kHz, and/or wherein spots on the value document (12) irradiated in each case by the ultrasound have a diameter smaller than 3.5 mm.

4. The method according to any of claims 1 to 3, wherein the places (O; O') are distributed regularly.

5. The method according to any of the previous claims, wherein the places (O; O') are disposed within a linear strip, preferably parallel to a transport direction (T) of the value documents, and/or wherein the places (O; O') are disposed within at least two strips.

6. The method according to any of the previous claims, wherein there is determined from further transmission values for different further places (O; O') on the value document (12) a further condition value which depends on a variation of the further transmission values for the further places (O; O'), and the preset criterion additionally includes the further condition value.

7. The method according to any of the previous claims, wherein transmission values for places (O; O') in a preset area of the value document (12) are not used, or used with lower weighting than ones for places (O; O') outside the area, upon determination of the condition value, and/or wherein transmission values for places (O; O'), in a preset area are weighted higher than transmission values for other places (O; O') upon determination of the condition value.

8. The method according to any of the previous claims, wherein the transmission values are corrected with respect to a transmission profile preset for the value document (12), before or upon determination of the condition value.

9. The method according to any of the previous claims, wherein deviations of the transmission values from a preset value, preferably an average of the transmission values, are used for considering the variation.

10. The method according to any of the previous claims, wherein deviations between transmission values for different places (O; O') are used for considering the variation, and wherein preferably the deviations between transmission values for different places (O; O') used are only deviations between transmission values for places (O; O') whose distance is no greater than a preset maximum distance.

**11.** The method according to any of the previous claims, wherein a spectrum of the transmission values is used for considering the variation.

**12.** An evaluation device for assessing a condition of at least one value document (12) with regard to limpness, which is so configured that it determines from transmission values representing the ultrasound transmission at different places (O; O') on the value document (12) a condition value which depends on a variation of the transmission values and characterizes the condition of the value document (12) with regard to limpness, and determines a condition of the value document (12) for the condition value using a preset criterion.

**13.** The evaluation device according to claim 12, which comprises a processor (38), a memory (40) storing a computer program according to claim 25 for execution by the processor (38), and an interface for detecting signals or data from which the transmission values and/or the variation of the transmission values can be determined or which represent the transmission values.

**14.** The evaluation device according to claim 12 or 13, which is configured for determining from further transmission values for different further places (O; O') on the value document (12) a further condition value which depends on a variation of the further transmission values for the further places (O; O'), and wherein the preset criterion additionally includes the further condition value.

**15.** The evaluation device according to any of claims 12 to 14, which is further so configured that transmission values for places (O; O') in a preset area of the value document (12) are not used, or used with lower weighting than ones for places (O; O') outside the area, upon determination of the condition value, and/or which is further so configured that transmission values for places (O; O') in a preset area are weighted higher than transmission values for other places (O; O') upon determination of the condition value.

**16.** The evaluation device according to any of claims 12 to 15, which is further so configured that the transmission values are corrected with respect to a transmission profile preset for the value document (12), before or upon determination of the condition value.

**17.** The evaluation device according to any of claims 12 to 16, which is configured for using deviations of the transmission values from a preset value, preferably an average of the transmission values, for considering the variation.

**18.** The evaluation device according to any of claims 12 to 17, which is configured for using deviations between transmission values for different places (O; O') for considering the variation, and for preferably using as deviations between transmission values for different places (O; O') only deviations between transmission values for places (O; O') whose distance is no greater than a preset maximum distance.

**19.** The evaluation device according to any of claims 12 to 18, which is configured for using a spectrum of the transmission values for considering the variation.

**20.** An apparatus for assessing a condition of at least one sheet-shaped value document (12) with regard to limpness, having
at least one ultrasound transmitter (42) and one ultrasound receiver (44) located opposite each other to form an ultrasound path (46) for a detection of the transmission at a place on the value document (12), an evaluation device (30) according to any of claims 12 to 19, and
an interface between the ultrasound receiver (44) and the evaluation device (30) by means of which transmission signals from the ultrasound receiver (44) which represent transmission values are supplied to the evaluation device (30) for assessing the condition of the value document (12), wherein the evaluation device is preferably connected to the ultrasound transmitter for the drive thereof and configured for driving the ultrasound transmitter to emit ultrasound pulses.

**21.** The apparatus according to claim 20, wherein the ultrasound transmitter (42) is configured for emitting ultrasound at an ultrasound frequency greater than 300 kHz, and/or wherein the ultrasound transmitter (42) is configured for emitting ultrasound which irradiates a spot with a diameter smaller than 3.5 mm when impinging upon a value document (12) disposed at a preset distance from the ultrasonic sensor.

**22.** The apparatus according to either of claims 20 and 21, which has a transport device for transporting the value document (12) through the ultrasound path (46) and wherein the evaluation device is configured for successively detecting corresponding transmission values in at least five different places (O; O') on the value document (12) and evaluating them.

**23.** The apparatus according to any of claims 20 to 22, which comprises at least one further ultrasound path (46) and wherein the evaluation device is configured for evaluating transmission signals detected along the further ultrasound path (46).

**24.** The apparatus according to any of claims 20 to 23, which has at least one further ultrasound receiver (44) for detecting transmission values which is spaced from the at least one ultrasound receiver (44) in a preset direction.

25. A computer program for execution by means of a data processing device having a processor (38) which contains program code upon whose execution the processor (38) carries out the method according to any of claims 1 to 11, and in particular determines from transmission values representing the ultrasound transmission at different places (O; O') on the value document (12) a condition value which depends on a variation of the transmission values and characterizes the condition of the value document (12) with regard to limpness, and determines a condition of the value document (12) for the condition value using a preset criterion.

26. A computer-readable data carrier on which a computer program according to claim 25 is stored.

**Revendications**

1. Procédé d'appréciation d'un état d'au moins un document de valeur (12) quant à sa flaccidité, dans lequel,
à partir de valeurs de transmission qui indiquent la transmission ultrasonore à différents endroits (O; O') sur le document de valeur (12), une valeur d'état qui dépend d'une variation des valeurs de transmission et caractérise l'état du document de valeur (12) quant à sa flaccidité est déterminée, et,
un état du document de valeur (12) est déterminé en utilisant un critère donné pour la valeur d'état,

2. Procédé selon la revendication 1, dans lequel des impulsions ultrasoniques sont envoyées sur au moins deux différents endroits (O; O') sur le document de valeur (12) et des impulsions ultrasoniques émanant des endroits (O; O') à la suite des impulsions ultrasoniques sont saisies en constituant les valeurs de transmission.

3. Procédé selon la revendication 1 ou 2, dans lequel les ultrasons présentent une fréquence ultrasonique supérieure à 300 kHz et/ou dans lequel des bribes du document de valeur (12) respectivement exposées à l'action des ultrasons présentent un diamètre inférieur à 3,5 mm.

4. Procédé selon une des revendications de 1 à 3, dans lequel les endroits (O; O') sont régulièrement répartis.

5. Procédé selon une des revendications précédentes, dans lequel les endroits (O; O') sont disposés à l'intérieur d'une bande linéaire, de préférence parallèlement à une direction de transport (T) des documents de valeur, et/ou dans lequel les endroits (O; O') sont disposés à l'intérieur d'au moins deux bandes.

6. Procédé selon une des revendications précédentes, dans lequel, à partir de valeurs de transmission supplémentaires pour différents endroits (O; O') supplémentaires sur le document de valeur (12), une valeur d'état supplémentaire qui dépend d'une variation des valeurs de transmission supplémentaires pour les endroits (O; O') supplémentaires est déterminée, et la valeur d'état supplémentaire entre additionnellement dans le critère donné.

7. Procédé selon une des revendications précédentes, dans lequel, lors de la détermination de la valeur d'état, des valeurs de transmission pour des endroits (O; O') situés dans une zone donnée du document de valeur (12) ne sont pas utilisées ou ne le sont qu'avec une pondération plus faible que des valeurs de transmission pour des endroits (O; O') situés à l'extérieur de la zone et/ou dans lequel, lors de la détermination de la valeur d'état, des valeurs de transmission pour des endroits (O; O') situés dans une zone donnée sont davantage pondérées que des valeurs de transmission pour d'autres endroits (O; O').

8. Procédé selon une des revendications précédentes, dans lequel, avant ou pendant la détermination de la valeur d'état, les valeurs de transmission sont corrigées par référence à un profil de transmission donné pour le document de valeur (12).

9. Procédé selon une des revendications précédentes, dans lequel, pour la prise en compte de la variation, des divergences des valeurs de transmission par rapport à une valeur donnée, de préférence par rapport à une moyenne des valeurs de transmission, sont utilisées.

10. Procédé selon une des revendications précédentes, dans lequel, pour la prise en compte de la variation, des divergences entre des valeurs de transmission pour différents endroits (O; O') sont utilisées et dans lequel de préférence, en tant que divergences entre des valeurs de transmission pour différents endroits (O; O'), uniquement des divergences entre des valeurs de transmission pour des endroits (O; O') dont l'écart n'est pas plus grand qu'un écart maximal donné sont utilisées.

11. Procédé selon une des revendications précédentes, dans lequel, pour la prise en compte de la variation, un spectre des valeurs de transmission est utilisé.

**12.** Equipement d'évaluation destiné à l'appréciation d'un état d'au moins un document de valeur (12) quant à sa flaccidité, qui est configuré de telle sorte que, à partir de valeurs de transmission qui indiquent la transmission ultrasonore à différents endroits (O; O') sur le document de valeur (12), il détermine une valeur d'état qui dépend d'une variation des valeurs de transmission et caractérise l'état du document de valeur (12) quant à sa flaccidité, et détermine, en utilisant un critère donné pour la valeur d'état, un état du document de valeur (12).

**13.** Equipement d'évaluation selon la revendication 12, qui comprend un processeur (38), une mémoire (40) dans laquelle un programme d'ordinateur est mémorisé selon la revendication 25 aux fins de l'exécution par le processeur (38), et une interface pour la saisie de signaux ou de données à partir desquels les valeurs de transmission et/ou la variation des valeurs de transmission sont déterminables ou qui indiquent les valeurs de transmission.

**14.** Equipement d'évaluation selon la revendication 12 ou 13, qui est configuré pour déterminer à partir de valeurs de transmission supplémentaires pour différents endroits (O; O') supplémentaires sur le document de valeur (12) une valeur d'état supplémentaire qui dépend d'une variation des valeurs de transmission supplémentaires pour les endroits (O; O') supplémentaires, et dans lequel la valeur d'état supplémentaire entre additionnellement dans le critère donné.

**15.** Equipement d'évaluation selon une des revendications de 12 à 14, qui est en outre configuré de telle sorte que, lors de la détermination de la valeur d'état, des valeurs de transmission pour des endroits (O; O') situés dans une zone donnée du document de valeur (12) ne sont pas utilisées ou ne le sont qu'avec une pondération plus faible que des valeurs de transmission pour des endroits (O; O') situés à l'extérieur de la zone et/ou qui est en outre configuré de telle sorte que, lors de la détermination de la valeur d'état, des valeurs de transmission pour des endroits (O; O') situés dans une zone donnée sont davantage pondérées que des valeurs de transmission pour d'autres endroits (O; O').

**16.** Equipement d'évaluation selon une des revendications de 12 à 15, qui est en outre configuré de telle sorte que, avant ou pendant la détermination de la valeur d'état, les valeurs de transmission sont corrigées par référence à un profil de transmission donné pour le document de valeur (12).

**17.** Equipement d'évaluation selon une des revendications de 12 à 16, qui, pour la prise en compte de la variation, est configuré pour utiliser des divergences des valeurs de transmission par rapport à une valeur donnée, de préférence par rapport à une moyenne des valeurs de transmission.

**18.** Equipement d'évaluation selon une des revendications de 12 à 17, qui, pour la prise en compte de la variation, est configuré pour utiliser des divergences entre des valeurs de transmission pour différents endroits (O; O') et de préférence, en tant que divergences entre des valeurs de transmission pour différents endroits (O; O'), uniquement des divergences entre des valeurs de transmission pour des endroits (O; O') dont l'écart n'est pas plus grand qu'un écart maximal donné.

**19.** Equipement d'évaluation selon une des revendications de 12 à 18, qui, pour la prise en compte de la variation, est configuré pour utiliser un spectre des valeurs de transmission.

**20.** Dispositif d'appréciation d'un état d'au moins un document de valeur (12) en forme de feuilles quant à sa flaccidité, doté d'au moins un émetteur ultrasonique (42) et d'un récepteur ultrasonique (44) qui constituent l'un en face de l'autre un parcours ultrasonique (46) pour une saisie de la transmission à un endroit sur le document de valeur (12),
d'un équipement d'évaluation (30) selon une des revendications de 12 à 19, et
d'une interface située entre le récepteur ultrasonique (44) et l'équipement d'évaluation (30) au moyen de laquelle des signaux de transmission du récepteur ultrasonique (44) qui représentent des valeurs de transmission sont acheminés à l'équipement d'évaluation (30) pour l'appréciation de l'état du document de valeur (12), l'équipement d'évaluation étant de préférence relié à l'émetteur ultrasonique pour sa commande et étant configuré pour commander l'émetteur ultrasonique quant à l'envoi d'impulsions ultrasoniques.

**21.** Dispositif selon la revendication 20, dans lequel l'émetteur ultrasonique (42) est configuré pour envoyer des ultrasons à une fréquence ultrasonique supérieure à 300 kHz et/ou dans lequel l'émetteur ultrasonique (42) est configuré pour l'envoi d'ultrasons qui, lors de l'entrée en impact avec un document de valeur (12) disposé à un écart donné du capteur ultrasonique, exposent à l'action ultrasonique une bribe d'un diamètre inférieur à 3,5 mm.

**22.** Dispositif selon une des revendications 20 ou 21, qui comporte un équipement de transport pour le transport du document de valeur (12) à travers le parcours ultrasonique (46) et dans lequel l'équipement d'évaluation (30) est configuré pour saisir les unes après les autres à au moins cinq différents endroits (O; O') sur le document de valeur (12) des valeurs de transmission y correspondant et pour évaluer ces dernières.

23. Dispositif selon une des revendications de 20 à 22, qui comprend au moins un parcours ultrasonique (46) supplémentaire et dans lequel l'équipement d'évaluation est configuré pour évaluer des signaux de transmission saisis le long du parcours ultrasonique (46) supplémentaire.

24. Dispositif selon une des revendications de 20 à 23, qui, pour la saisie de valeurs de transmission, comporte au moins un récepteur ultrasonique (44) supplémentaire qui est écarté du au moins un récepteur ultrasonique (44) dans une direction donnée.

25. Programme d'ordinateur destiné à l'exécution au moyen d'un équipement de traitement de données doté d'un processeur (38) renfermant des codes de programme, lors de l'exécution duquel le processeur (38) exécute le procédé selon une des revendications de 1 à 11, et détermine notamment, à partir de valeurs de transmission qui indiquent la transmission ultrasonore à différents endroits (O; O') sur le document de valeur (12), une valeur d'état qui dépend d'une variation des valeurs de transmission et caractérisé l'état du document de valeur (12) quant à sa flaccidité, et détermine un état du document de valeur (12) en utilisant un critère donné pour la valeur d'état.

26. Support de données lisible par ordinateur, sur lequel un programme d'ordinateur selon la revendication 25 est mémorisé.

Fig. 1

30

46

42

44

12

⊗ T

**Fig. 2**

42

42

42

T

**Fig. 3**

T

50

48

12

**Fig. 4**

Fig. 5

12

Start

S10 — Prüfung auf untypische Transmissionswerte

S12 — Ermittlung eines Zustandswerts im Hinblick auf Lappigkeit in Abhängigkeit von Variation der Transmissionswerte

S14 — Prüfung eines den Zustandswert enthaltenden Kriteriums für den Gesamtzustand der Banknote

S16 — Ansteuerung der Transporteinrichtung entsprechend Prüfungsergebnis

Fig. 6

S12 ——— Prüfung auf untypische
Transmissionswerte

S18 ——— Ermittlung von Bereichszustandswerten im Hinblick auf Lappigkeit in
Abhängigkeit von Variationen der
Transmissionswerte in den jeweiligen Erfassungsbereichen

Start

Prüfung eines die Bereichszustandswerte enthaltenden Kriteriums für den
S20 ——— Gesamtzustand der Banknote

Ansteuerung der Transporteinrichtung
S16 ——— entsprechend Prüfungsergebnis

Fig. 7

**EP 2 044 426 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004095380 A1
- DE 10318756 A1
- WO 0210716 A2
- DE 10029442 A1